# EUROPEAN PATENT SPECIFICATION

(11) **EP 4 607 508 B1**
(45) Date of publication and mention of the grant of the patent: **10.06.2026**
(21) Application number: 25158287.0
(22) Date of filing: 17.02.2025
(51) Int. Cl.: G10L 15/18, G10L 15/22, G10L 25/78

(54) **METHOD AND SYSTEM FOR EXPRESSING TELEPRESENCE ROBOT INTERNAL STATES USING COMBINATION OF MULTIPLE MODALITIES**
VERFAHREN UND SYSTEM UM INTERNE ZUSTÄNDE EINES TELEPRÄSENZROBOTERS ZUM AUSDRUCK ZU BRINGEN UNTER VERWENDUNG EINER KOMBINATION VON MEHREREN MODALITÄTEN
PROCÉDÉ ET SYSTÈME D'EXPRESSION D'ÉTATS INTERNES DE ROBOT DE TÉLÉPRÉSENCE À L'AIDE D'UNE COMBINAISON DE MODALITÉS MULTIPLES

(30) Priority: 23.02.2024 IN 202421013034
(43) Date of publication of application: 27.08.2025
(73) Proprietor: Tata Consultancy Services Limited, Maharashtra (IN)
(72) Inventor: SARKAR, CHAYAN, 110001 New Delhi (IN); PRAMANICK, PRADIP, 700156 Kolkata (IN); ROY, ARNAB, 700156 Kolkata (IN)
(74) Representative: Goddar, Heinz J.

(56) References cited:
- JP-A- 2005 193 330
- US-A1- 2014 277 735
- US-A1- 2016 343 376
- US-A1- 2018 133 900

## Description

### CROSS-REFERENCE TO RELATED APPLICATIONS AND PRIORITY

The present application claims priority to Indian application no. 202421013034, filed on Feb 23, 2024.

### TECHNICAL FIELD

The disclosure herein generally relates to a telepresence robot, and, more particularly, a method and system for expressing telepresence robot internal states using combination of multiple modalities.

### BACKGROUND

Telepresence robots are robotic devices that allow teleoperators to be present and interact with others in a different location. They are increasingly used in various domains, such as education, health care, business, and social activities, where physical presence is not possible or desirable. The telepresence robots offer many benefits, such as enhancing communication, collaboration, and social inclusion, as well as reducing travel costs and environmental impacts. However, the telepresence robots also pose many challenges for interaction design, especially in terms of reducing cognitive load of the teleoperator while using the telepresence robot.

One of the important objectives of the interaction design of the telepresence robots is to enable natural and intuitive control of the telepresence robot by the teleoperator. This can be achieved by providing various modalities of interaction, such as semi-autonomous navigation, intuitive control using pointing devices, spoken interaction, and thereof. Among these modalities, spoken interaction is particularly appealing because it provides a natural way to control the telepresence robot without requiring complex or cumbersome input devices. However, the spoken interaction also introduces some challenges for the teleoperator, such as understanding when the telepresence robot is listening, and what is an internal state of the telepresence robot. These challenges are primarily related to the problem of turn-taking, which is the process of managing the exchange of speaking turns between interlocutors in a conversation. The turn-taking is a fundamental aspect of human communication, which relies on various verbal and non-verbal cues to signal an intention and readiness to speak or listen. For example, humans use gaze, body posture, body movement, facial expressions, eye blinking, head nodding, and thereof, to indicate their attention, interest, agreement, disagreement, or confusion during a conversation. These cues help to make the interaction more intuitive and engaging, as well as to avoid misunderstandings and conflicts. However, the telepresence robots typically lack these non-verbal cues or have limited capabilities to express them. This makes the teleoperator challenge to infer the internal state of the telepresence robot and to coordinate their speaking turns with the telepresence robot. As a result, the teleoperator may experience frustration, confusion, dissatisfaction, or disengagement while interacting with the telepresence robot. An example of a known implementation of a telepresence robot can be found in the patent document JP 2005 193330 A which describes a "companion device, PCD" (= a "robot") with vocal interactions capabilities including "VAD", "wake word detection", "ASR", "NLU" and able to transition its internal state for the purpose of controlling and expressing emotion, affect and personality through a number of cues including facial expression (either by animation or movement).

### SUMMARY

Embodiments of the present disclosure present technological improvements as solutions to one or more of the above-mentioned technical problems recognized by the inventors in conventional systems. The invention is as defined in appended independent claims 1, 7 and 13. Preferred embodiments are set forth in the dependent claims.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for expressing telepresence robot internal states using combination of multiple modalities, in accordance with some embodiments of the present disclosure.
FIG. 2 is a functional architecture depicting process flow of the system while expressing the telepresence robot internal states using the combination of multiple modalities, in accordance with some embodiments of the present disclosure.
FIG. 3 illustrates a framework for describing a plurality of internal states of the telepresence robot using expressive animation, in accordance with some embodiments of the present disclosure.
FIGS. 4A, 4B, and 4C depict a flow diagram of a method for expressing the plurality of internal states of the telepresence robot using the combination of multiple modalities, using the system of FIG. 1, in accordance with some embodiments of the present disclosure.
FIG. 5 depicts an architecture diagram for training a robot internal state predictor model with a plurality of inputs and corresponding annotated labels, in accordance with some embodiments of the present disclosure.
FIG. 6 illustrates an internal state transition of the telepresence robot for the plurality of internal states, in accordance with some embodiments of the present disclosure.
FIG. 7 illustrates a plurality of emotional expressions related to the plurality of the internal states of the telepresence robot, in accordance with some embodiments of the present disclosure.
FIG. 8 depicts an exemplary illustration of conveying the internal state of the telepresence robot using the emotional expression along with a text message to the teleoperator, in accordance with some embodiments of the present disclosure.
FIGS. 9A and 9B depict results of identification of an in-context emotional expression and out-of-context emotional expression of the telepresence robot, in accordance with some embodiments of the present disclosure.
FIGS. 10A, 10B, and 10C illustrate user ratings for the telepresence robot showing both the emotional expressions with the text messages, and only text messages, in accordance with some embodiments of the present disclosure.
FIGS. 11A, 11B, and 11C illustrate user ratings for the telepresence robot showing both the emotional expressions with the text messages, and only emotional expressions, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The use of telepresence robots has become multifaceted, allowing a wide range of applications, with increasing prevalence of the telepresence robots in various domains. There has been a strong focus on aiding teleoperators and developing intuitive ways to control the telepresence robot remotely with minimal effort. The primary objective of an interaction design of the telepresence robot is to give the teleoperator natural, and intuitive control over the telepresence robot. One such approach is to use spoken natural language interaction, which is a hands-free and intuitive approach to interact with the telepresence robot. However, the teleoperators often face uncertainty and difficulty in determining whether the telepresence robot comprehends their instructions or requests. Consequently, there is a pressing need for the telepresence robots to express the internal states during Human-robot interaction (HRI) with the aim of making the interaction intuitive and transparent. Without such a mechanism, the teleoperator finds it cumbersome to operate or interact with the telepresence robot and decreases the user experience drastically.

Prior research on the transparency in the HRI focus on finding ways for the telepresence robot to reveal the internal state and the understanding of the world, with the objective to make behavior of the telepresence robot predictable. Transparent interaction is often seen as a tool to counter uncertainty in literature ("B. Nesset, D. A. Robb, J. Lopes, and H. Hastie, "Transparency in hri: Trust and decision making in the face of robot errors," in Companion of the 2021 ACM/IEEE International Conference on Human-Robot Interaction, 2021, pp. 313-317."). Existing works have primarily explored conveying transparency through explanations in natural language, which can be displayed on a screen or spoken out. However, conveying language-based explanations may be unsuitable for various telepresence robot hardware and HRI scenarios, utilizing non-verbal modalities such as a gaze modality, a gesture modality, an imagery modality, and thereof, have been explored in several existing works ("S. Wallk¨otter, S. Tulli, G. Castellano, A. Paiva, and M. Chetouani, "Explainable embodied agents through social cues: a review," ACM Transactions on Human-Robot Interaction (THRI), vol. 10, no. 3, pp. 1-24, 2021."). Particularly, to indicate directional intent during navigation, modalities like the gesture modality, an icon imagery modality, a light and a sound modality have been used extensively in prior research ("N. J. Hetherington, E. A. Croft, and H. M. Van der Loos, "Hey robot, which way are you going? nonverbal motion legibility cues for human-robot spatial interaction," IEEE Robotics and Automation Letters, vol. 6, no. 3, pp. 5010-5015, 2021."), ("G. Angelopoulos, F. Vigni, A. Rossi, G. Russo, M. Turco, and S. Rossi, "Familiar acoustic cues for legible service robots," in 2022 31st IEEE International Conference on Robot and Human Interactive Communication (RO-MAN). IEEE, 2022, pp. 1187-1192."), ("G. Angelopoulos, A. Rossi, C. Di Napoli, and S. Rossi, "You are in my way: Non-verbal social cues for legible robot navigation behaviors,"in 2022 IEEE/RSJ International Conference on Intelligent Robots and Systems (IROS). IEEE, 2022, pp. 657-662."). Most of the prior research on improving transparency in HRI has considered only co-located interaction between the telepresence robot and a user or a participant.

Further research studies state a positive impact on transparency when more than one modality is used for interaction. These include a diverse combination of visual and textual explanation ("A. Halilovic and F. Lindner, "Visuo-textual explanations of a robot's navigational choices," in Companion of the 2023 ACM/IEEE International Conference on Human-Robot Interaction, 2023, pp. 531-535."), an imagery and gesture (A. Rossi, M. M. Scheunemann, G. L'Arco, and S. Rossi, "Evaluation of a humanoid robot's emotional gestures for transparent interaction," in Social Robotics: 13th International Conference, ICSR 2021, Singapore, Singapore, November 10-13, 2021, Proceedings 13. Springer, 2021, pp. 397-407.), light and sound (G. Angelopoulos, F. Vigni, A. Rossi, G. Russo, M. Turco, and S. Rossi, "Familiar acoustic cues for legible service robots," in 2022 31st IEEE International Conference on Robot and Human Interactive Communication (RO-MAN). IEEE, 2022, pp. 1187-1192.), gesture by whole-body motion and emotional expressions ("F. Vigni, A. Rossi, L. Miccio, and S. Rossi, "On the emotional transparency of a non-humanoid social robot," in International Conference on Social Robotics. Springer, 2022, pp. 290-299."), and thereof. However, these works are again primarily related to co-located HRI interaction between the telepresence robot and the user or the participant.

Further several researches have hypothesized that emotions can represent the internal state of a robot ("S. Wallk¨otter, S. Tulli, G. Castellano, A. Paiva, and M. Chetouani, "Explainable embodied agents through social cues: a review," ACM Transactions on Human-Robot Interaction (THRI), vol. 10, no. 3, pp. 1-24, 2021."), ("S. Y. Sch¨ott, R. M. Amin, and A. Butz, "A literature survey of how to convey transparency in co-located human-robot interaction," Multimodal Technologies and Interaction, vol. 7, no. 3, p. 25, 2023"). However, this is also related to how the user or participant people can better recognize the emotion of the telepresence robot in specific contexts ("J. Zhang and A. J. Sharkey, "Contextual recognition of robot emotions," in Towards Autonomous Robotic Systems: 12th Annual Conference, TAROS 2011, Sheffield, UK, August 31-September 2, 2011.Proceedings 12. Springer, 2011, pp. 78-89."). The emotion, or an emotional reaction can be conveyed in many ways, and often using multiple modalities at the same time. For anthropomorphic robots, facial expressions can be a useful medium to express emotions and thus induce transparency.

Further a few existing studies have explored emotional facial expressions for transparency during learning of the telepresence robot, particularly reinforcement learning. Existing research on displaying the emotional expressions in the telepresence robot is also primarily targeted towards the participants who are collocated with the telepresence robot, not the teleoperator. In such scenarios in existing works, often the objective of displaying emotions and facial expressions is to express the mental state of the teleoperator.

Further in existing literature significantly mentioned of the telepresence robots expressing the internal states using the emotional expressions and the text messages are based on the perceived input from the co-located user or the participant, not the teleoperator.

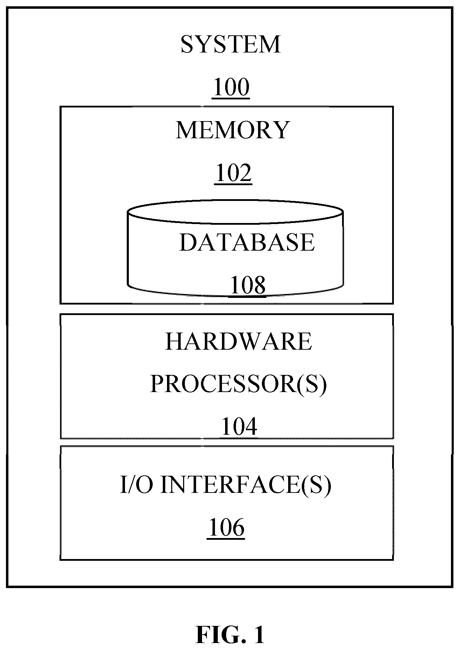

Embodiments herein provide a method and system for expressing telepresence robot internal states using combination of multiple modalities. The disclosed method focusses on the telepresence robot expressing its own internal working states corresponding to a task processing in the form of a plurality of emotional expressions and corresponding text messages to the teleoperator, using a robot internal state predictor model. The internal working states are predicted by the robot internal state predictor model using (i) a previous internal state of the telepresence robot, (ii) a wake word, (iii) one of (a) a 'with audio' message and (b) a 'no audio' message, (iv) a text output, (v) an intended task, (vi) an ambiguity state vector, and (vii) a task manager state of the telepresence robot. Unlike the state of art techniques, which express an emotion as its internal state, this disclosed method expresses the internal state as the emotional expression with respect to task processing of the telepresence robot. Referring now to the drawings, and more particularly to FIG. 1 through FIG. 11C, where similar reference characters denote corresponding features consistently throughout the figures, there are shown preferred embodiments, and these embodiments are described in the context of the following exemplary system and/or method.

FIG. 1 is a functional block diagram of a system 100 for expressing the telepresence robot internal states using combination of multiple modalities, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a continuous incoming audio stream, the wake word, a plurality of internal states, a plurality of emotional expressions, a plurality of inputs a predefined minimum duration threshold, a predefined sliding window, a predefined maximum duration, a plurality of positive voice activity detection (VAD) chunks, a plurality of negative VAD chunks, and a predefined silence threshold. The memory 102 further comprises a plurality of modules (not shown) for various technique(s) such as a VAD, a pretrained Automatic Speech Recognition (ASR) Neural network model, a pretrained natural language understanding (NLU) model, a pretrained wake word neural network model, and a heuristic technique. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein.

The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

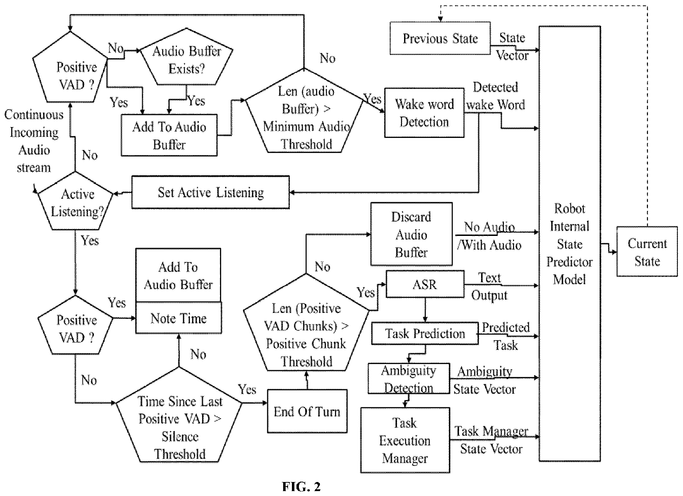

FIG. 2 is a functional architecture depicting process flow if the system while expressing the telepresence robot internal states using combination of multiple modalities, in accordance with some embodiments of the present disclosure. Initially the VAD is performed over the predefined sliding window, on the continuous incoming audio stream and stored in an audio buffer. A wake word detection is performed on the audio buffer using the pretrained wake word neural network model. Further the VAD is performed over the predefined sliding window, on the continuous incoming audio stream corresponding to an instruction to the telepresence robot. The internal state from among the plurality of internal states of the telepresence robot is predicted by feeding the plurality of inputs to the robot internal state predictor model. The plurality of inputs comprises (i) the previous internal state of the telepresence robot, (ii) the wake word predicted by the pretrained wake word neural network model, (iii) one of (a) the 'with audio' message and (b) the 'no audio' message, obtained based on a length of the plurality of positive VAD chunks satisfying a predefined chunk threshold (iv) the text output predicted by the pretrained ASR neural network model, (v) the intended task predicted by the pretrained NLU model, (vi) the ambiguity state vector, and (vii) the task manager state vector of the telepresence robot.

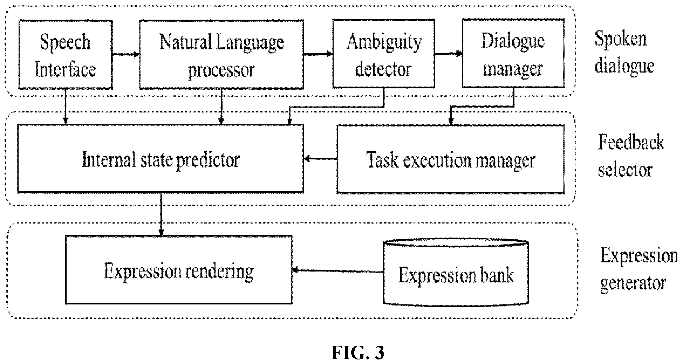

FIG. 3 illustrates a framework for describing the internal states of the telepresence robot using emotional expressions and text messages, in accordance with some embodiments of the present disclosure. The framework comprises of a spoken dialogue component, a feedback selector component, and an expression generation component. The spoken dialogue further comprises sub-components such as a speech interface, a natural language understanding, and a dialogue manager. The speech interface has a turn-taking module which detects when the teleoperator intends to speak, and an ASR module that converts the audio stream to the text output. The turn taking module is designed as a combination of an explicit cue based signaling and a silence-based model for an end of turn detection. The explicit cue based signaling is based on buttons on a web interface available to the teleoperator. The teleoperator can press a stop speaking button to indicate the end of turn. The silence-based model is composed of the predefined minimum duration threshold, the predefined sliding window, the predefined maximum duration, and a predefined silence threshold. The natural language understanding corresponds to the pretrained NLU model which is used to extract the task and the associated parameters from the text output of the ASR. Based on the predictions of the pretrained NLU model, the method selects the appropriate text output and the emotional expression from among the plurality of emotional expressions.

The dialog manager (DM) is responsible for asking questions to the teleoperator in cases of visual ambiguity, mismatch, or lack of information to complete the task. Like the pretrained NLU model, the predictions of the DM affect the text output and the emotional expression shown to the teleoperator.

The feedback selector component for the telepresence robot uses the internal state predictor model to monitor the dialogue system and a task execution manager. The task execution manager executes the task. The feedback selector determines which internal state of the telepresence robot is based on the instructions from the teleoperator and environmental conditions. The environmental condition refers to objects around the telepresence robot. If the teleoperator refers to a door and the telepresence robot could not see the door using a computer vision algorithm, this leads to a type of ambiguity. The objects in vicinity of the telepresence robot are referred to as the environmental conditions.

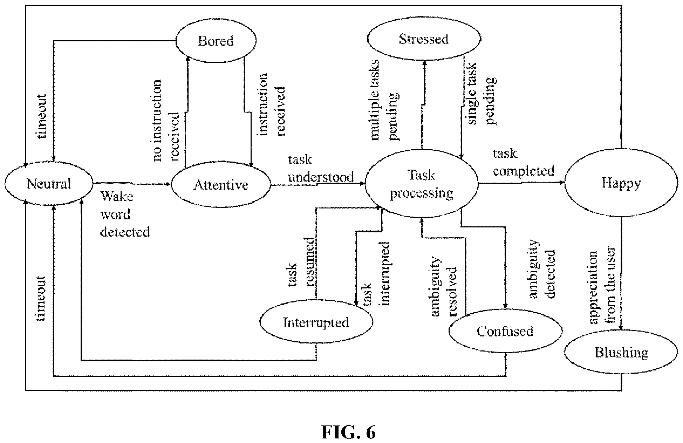

FIG. 6 illustrates internal state transition of the telepresence robot for the plurality of internal states, in accordance with some embodiments of the present disclosure. The telepresence robot starts in a neutral state and moves to an attentive state when it receives the wake word "Avixa", in accordance with some embodiments of the present disclosure. If no instruction is given for a while after the successful detection of the wake word, the telepresence robot becomes bored. It returns to the attentive state when it gets a valid command. Then, the telepresence robot starts working on the task and enters the task processing state. If there is any ambiguity or interruption in the environment or the command, the telepresence robot becomes confused or interrupted and tries to resolve the issue or ask for clarification. Once the issue is resolved, the telepresence robot resumes the task processing state. When the task is completed, the telepresence robot becomes happy and expresses its satisfaction. If the teleoperator praises the telepresence robot for its good work, the telepresence robot blushes and thanks the teleoperator. From any of internal states, the telepresence automatically returns to the neutral state after a timeout period.

In the expression generation component, a set of animated expression are designed for the plurality of internal states and are stored in an expression bank. Based on the internal state among the plurality of internal states of the telepresence robot, the suitable emotional expression among the plurality of emotional expressions is rendered on display of the teleoperator. The plurality of emotional expressions are designed using adobe animator and the corresponding animations showing the internal state transitions are made using adobe animate CC (Creative Cloud). The designs of the plurality of emotional expressions have been made by using Facial Action Coding System (FACS) theory. The plurality of emotional expressions are selected based on different mental states that a human can be in at any point of situation in place of the telepresence robot. Human emotional expressions can be denoted by valence and arousal, where valence is indicated as pleasure and displeasure comprising a positive valence and a negative valence of emotion and arousal is indicated by the excitement and non-excitement comprising a positive arousal and a negative arousal. The plurality of emotional expressions corresponding to the plurality of internal states include a neutral expression, an attentive expression, a calm expression, a happy expression, a bored expression, a stressed expression, an interrupted expression, a confused expression, and a blushing expression. Each of these expressions contained a pair of eyes and a mouth on a black background. The animations showing the internal state transitions from one emotional expression to another emotional expression is made based on the possible internal state transitions from the given internal state to another internal state. For each of the plurality of internal states, the expression bank stores either an image or a short, pre-rendered video, as designed for the corresponding emotional expression. It also stores the prerendered animation for every pair of the internal states, i.e. for every internal state transition.

For each of the specific internal state, the corresponding emotional expression is displayed on the screen interface of the teleoperator, via an expression rendering module. The corresponding plurality of emotional expressions are displayed in the screen interface using PyGame 2, which is a python library used for developing interactive multimedia applications. It provides a set of functions that helps creating simulations and interactive graphical problems. On the internal state transition, the expression rendering module selects the corresponding pre-rendered animation from the expression bank and then generates and displays a continuous video in PyGame, by looping the corresponding image or animation for the new internal state.

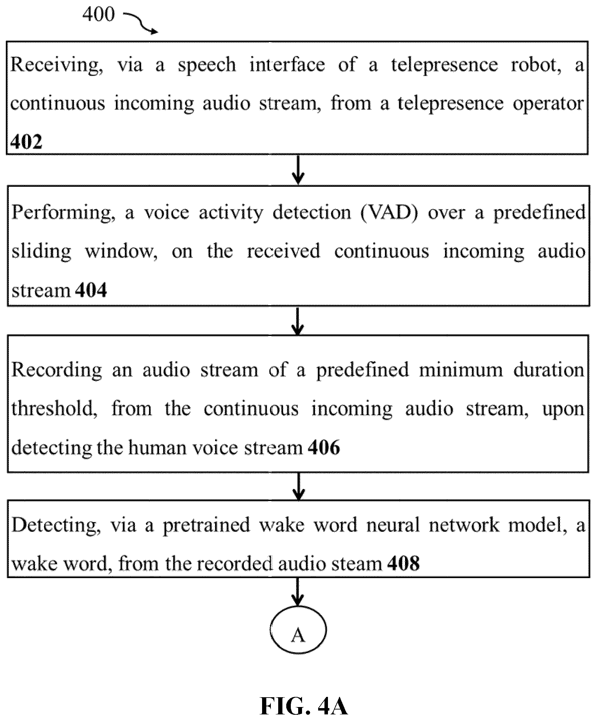

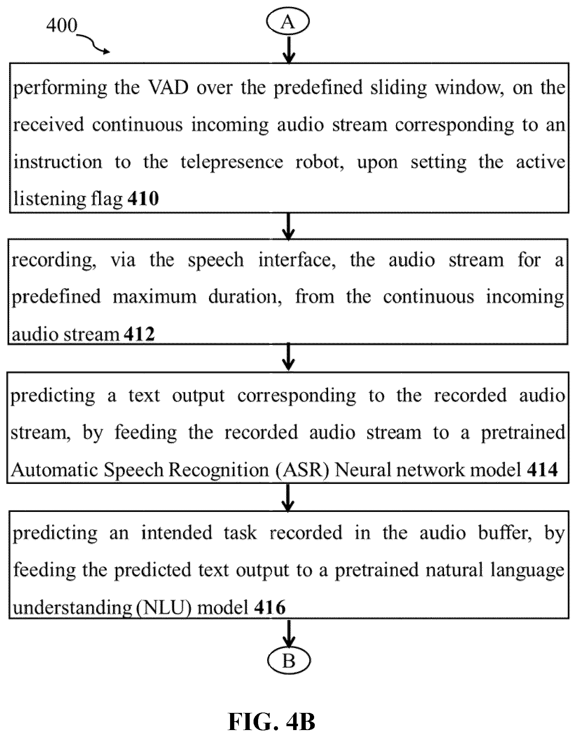

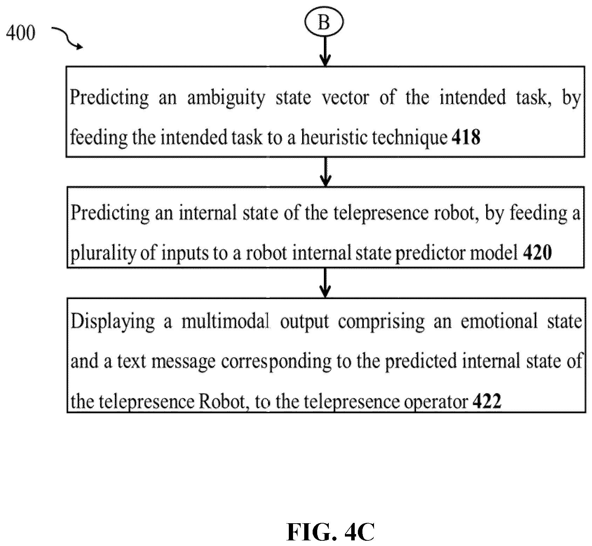

FIGS. 4A, 4B, and 4C depict flow diagram of a method 400 for expressing the telepresence robot internal states using the combination of multiple modalities, using the system of FIG. 1, according to some embodiments of the present disclosure.

In an embodiment, the system 100 comprises one or more data storage devices or the memory 102 operatively coupled to the processor(s) 104 and is configured to store instructions for execution of steps of the method 400 by the processor(s) 104. The steps of the method 400 of the present disclosure will now be explained with reference to the components or blocks of the system 100 as depicted in FIG. 1, the functional architecture depicted in FIG. 2, the framework described in FIG. 3, and the steps of flow diagram as depicted in FIGS. 4A, 4B, and 4C. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to steps of FIG. 4A, at step 402 of the method 400, via one or more hardware processors receive, via the speech interface of the telepresence robot, the continuous incoming audio stream, from the teleoperator. The teleoperator interacts with the telepresence robot through an interfacing device such as a laptop, a smartphone or a tablet that consists of a microphone and a speaker for speech input and output. The telepresence robot has a camera and the speaker for speech input and output. The telepresence robot in the disclosed method is semi-autonomous such that it can perform some tasks on its own such as navigation and requires some commands from the teleoperator to perform tasks such as finding direction or destination. The telepresence robot uses the wake word to activate its speech recognition and listen for the instruction from the teleoperator. The telepresence robot uses "Avixa" as the wake word, according to some embodiments of the present disclosure.

At step 404 of the method 400, the one or more hardware processors perform, the VAD, over a predefined sliding window, on the received continuous incoming audio stream. The VAD is performed continuously until the VAD returns a positive signal on detecting a human voice in the continuous incoming audio stream.

Upon detecting the positive VAD in the in the continuous incoming audio stream, the method 400 at step 406, the one or more hardware processors, record, an audio stream of the predefined minimum duration threshold, from the continuous incoming audio stream, upon detecting the human voice in the continuous incoming audio stream. The recorded audio stream is sequentially added to the audio buffer. Upon adding, if a length of the recorded audio stream is less than the predefined minimum duration threshold, the telepresence robot resumes to the VAD.

At step 408 of the method 400, the one or more hardware processors, detect, via the pretrained wake word neural network model, the wake word, from the recorded audio steam, provided the length of the recorded audio stream is greater than the predefined minimum duration threshold. Upon the pretrained wake word neural network model returns wake word detection positive in detecting the wake word, the telepresence robot sets an active listening flag. If the pretrained wake word neural network model returns negative in detecting the wake word, the telepresence robot resumes to the VAD. The pretrained wake word neural network model is used to detect intent of speaking of the teleoperator. The wake word neural network model is trained by adopting a transformer-based model with roughly 9 hours of in-house data from 16 persons and about 30 hours of data from speech command dataset.

The wake word neural network model is trained with a chunk audio data typically of 1 sec duration. The audio data is preprocessed and converted into a list of vectors. The audio data is then chunked into smaller windows of 20 ms. Then, MFCC (Mel Frequency Cepstral Coefficients) is calculated for each chunk of 20 ms. This provides 50 vectors of 'd' dimension. 'd' is the number of MFCC features. Then these vectors are passed through a bunch of transformer layers, typically 6. The output vectors of the final transformers are added. Finally, the summed-up vector is passed through a linear layer and a softmax is applied to detect if the audio data contains wake word or not which is a binary classification.

At step 410 of the method 400, the one or more hardware processors, performing, the VAD over the predefined sliding window, on the received continuous incoming audio stream corresponding to the instruction to the telepresence robot, upon setting the active listening flag. The instruction comprises a sequence of commands from the teleoperator to the telepresence robot.

At step 412 of the method 400, the one or more hardware processors, record, via the speech interface of the one or more hardware processors, the audio stream for the predefined maximum duration, from the continuous incoming audio stream. The audio stream corresponding to the instruction comprises (i) the plurality of positive VAD chunks identified in the audio stream corresponding to presence of the human voice in the continuous incoming audio stream, (ii) the plurality of negative VAD chunks identified in the audio stream corresponding to absence of the human voice in the continuous incoming audio stream, which are periodically added to the audio buffer based on the plurality of positive VAD chunks and the predefined silence threshold. If a continuous duration of the plurality of negative VAD chunks is greater than the predefined silence threshold, the recording of the audio stream is terminated.

Upon the termination of the recording of the audio stream, if the length of the plurality of positive VAD chunks satisfying the predefined chunk threshold, the 'with audio' message is fed to the robot internal state predictor model. If the length of the plurality of positive VAD chunks does not satisfy the predefined chunk threshold, the audio buffer is discarded, and the 'no audio' message is fed to the robot internal state predictor model.

At step 414 of the method 400, the one or more hardware processors, predict the text output corresponding to the recorded audio stream, by feeding the recorded audio stream to the pretrained ASR Neural network model.

At step 416 of the method 400, the one or more hardware processors, predict the intended task recorded in the audio buffer, by feeding the predicted text output to the pretrained NLU model.

At step 418 of the method 400, the one or more hardware processors, predict the ambiguity state vector of the intended task, by feeding the intended task to a heuristic technique.

At step 420 of the method 400, the one or more hardware processors, predict the internal state among the plurality of internal states corresponding to task processing of the telepresence robot, by feeding the plurality of inputs to the robot internal state predictor model. The plurality of inputs comprises (i) the previous internal state of the telepresence robot, (ii) the wake word predicted by the pretrained wake word neural network model, (iii) one of (a) the 'with audio' message and (b) the 'no audio' message, (iv) the text output predicted by the ASR neural network model, (v) the intended task predicted by the pretrained NLU model, (vi) the ambiguity state vector, and (vii) the task manager state vector of the telepresence robot. The ambiguity state vector is a one-hot vector comprising 7 ambiguity states and each one is represented using a 7-dimensional vector as shown in Table. I, in accordance with some embodiments of the present disclosure. If the telepresence robot has not yet received the instruction from the teleoperator, the ambiguity detection is not invoked. In that case, a default state vector is used, which is also a 7-dimensional vector with all zeros.

**Table. I**

| **Ambiguity states** | **Description** | **Vector representation** |
|---|---|---|
| Default | | 0000000 |
| No question (NQ) | All the information is available. Non-ambiguous | 1000000 |
| Ambiguous attribute (AA) | Multiple matching objects, but no attribute mentioned in the instruction. | 0100000 |
| Implicitly matching attribute (IMA) | Unique object with attribute, but no attribute mentioned in the instruction. | 0010000 |
| Attribute mismatch (AM) | Unique object, but its attribute is different from the instruction. | 0001000 |
| Attribute not found (ANF) | Unique object without attribute. but attribute is mentioned in the instruction. | 0000100 |
| Ambiguous object and attribute (AOA) | Multiple matching objects that have either none or the same attributes. | 0000010 |
| Not found (NF) | The object can't be found. possibly an error in object detection. | 01 |

The task manger state vector is a one-hot vector comprising 7 states and each one is represented using a 7-dimensional vector as shown in Table. II, in accordance with some embodiments of the present disclosure. When the telepresence robot is not performing any of the task, it is in idle state.

**Table. II**

| **Task manager states** | **Description** | **Vector representation** |
|---|---|---|
| Idle | When not executing any task | 1000000 |
| Task understanding ambiguity | Failed to understand the task due to ambiguous instruction from the user | 0100000 |
| Task argument missing | Intended task is understand from the user input but some task argument is missing | 0010000 |
| Task executing | Currentlv executing a task | 0001000 |
| Task interrupted | Executing of the task is current interrupted by the user | 0000100 |
| Task execution ambiguity | While executing the task, some ambiguity is faced | 0000010 |
| Task completed | Completed executing the current task | 0000001 |

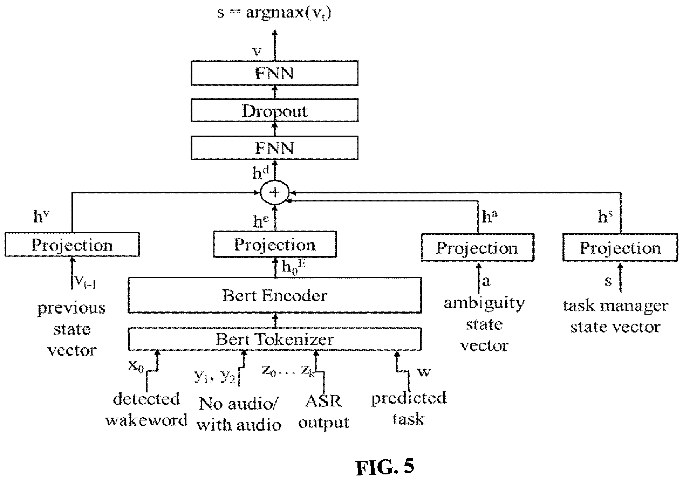

The robot internal state predictor model is pretrained with the plurality of inputs and annotated labels, as depicted in FIG. 5, in accordance with some embodiments of the present disclosure.

Predicting the internal state of the telepresence robot, by the robot internal state predictor model comprises creating an input vector composed of concatenation of the plurality of inputs, wherein the input vector comprises (a) an one-hot vector encoding of the previous internal state, (ii) the wake word, (iii) one of (a) the 'with audio' message and (b) the 'no audio' message, (iv) the text output (v) the intended task, and (vi) the ambiguity state vector, and (vii) and one-hot vector encoding of the task manager state vector of the telepresence robot, wherein the internal state of the telepresence robot is predicted by applying the argmax on an output of the robot internal state predictor model.

The plurality of internal states of the telepresence robot represents the corresponding plurality of emotional expressions and corresponding text messages, wherein the text messages are predefined based on the transitions of the plurality of internal states of the telepresence robot from one state to another state, wherein the plurality of internal states comprising (i) neutral state, (ii) attentive state (ii) calm bored state, (iv) happy state, (v) bored state, (vi) stressed state, (vii) interrupted state, (viii) confused state, and (ix) blushing state. Transitions of the plurality of internal states for different interaction stages of the telepresence robot from one internal state to another internal state depicted in FIG. 6, in accordance with some embodiments of the present disclosure, are designed as:
(a) Initializing the internal state of the plurality of internal states to a neutral state during the telepresence robot is listening before detecting the wake word.
(b) Transforming from the neutral state to the attentive state once the wake word is detected, wherein in the neutral state, the telepresence robot expects the instruction from the teleoperator indicating the active listening flag.
(c) Transforming from the attentive state to the bored state beyond the predefined silence threshold if the instruction not received from the teleoperator.
(d) Transforming from the attentive to the task processing state if the instruction received from the teleoperator.
(e) Transforming from the task processing state to the stressed state if the telepresence robot is currently performing another task.
(f) Transforming from the task processing state to the interrupted state if the telepresence robot is interrupted by an action.
(g) Transforming from the task processing state to the confused state if the telepresence robot is confused while performing the action.
(h) Transforming from the task processing state to the happy state on completion of the given instruction.
(i) Transforming from the happy state to the blushing state upon receiving an appreciation from the teleoperator.

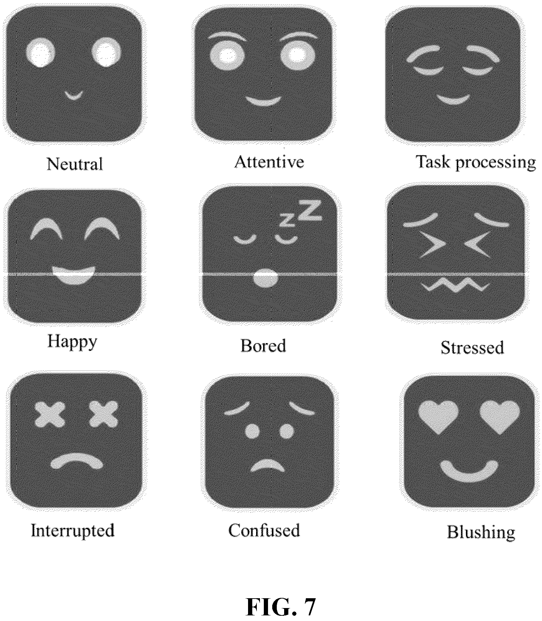

At step 422 of method 400, the one or more hardware processors, display a multimodal output comprising the emotional expression and the text message corresponding to the predicted internal state of the telepresence robot, to the teleoperator. The text messages corresponding to the transitions of the plurality of internal states are depicted in Table. III. FIG. 7 illustrates the plurality of emotional expressions and the corresponding text messages related to each of the plurality of internal states of the telepresence robot, in accordance with some embodiments of the present disclosure.

**Table. III**

| **Internal state transition** | **Text message** |
|---|---|
| Neutral → Attentive | Listening |
| Attentive → Bored | I could not hear you. Can you please speak out? |
| Bored → Attentive | Listening |
| Bored → Neutral | <no message> |
| Attentive → Task processing | <Task type template> |
| Task processing → Happy | Task completed successfully |
| Task processing → Stressed | Already |
| Stressed →Task processing | Now <Task type template> |
| Task processing →Confused | <Ambiguity template> |
| Confused →Task processing | <Task type template> |
| Confused →Neutral | Aborting <task type> |
| Task processing →Interrupted | Pausing <task type> |
| Interrupted →Task processing | Resuming <Task type template> |
| Interrupted →Neutral | Aborting <Task type template> |
| Happy → Blushing | Thank you for your acknowledgement |
| Happy → Neutral | <no message> |
| Blushing → Neutral | <no message> |

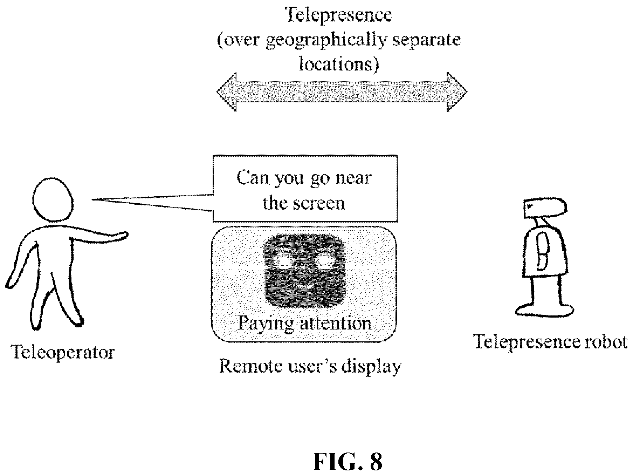

FIG. 8 depicts an exemplary illustration of conveying the internal state of the telepresence robot using the emotional expression along with text message to the teleoperator, in accordance with some embodiments of the present disclosure.

### Experimental Details

The experiment involves a user study conducted online. The objective of the user study is twofold. Firstly, it involves evaluating design and animation of the plurality of emotional expressions through the user study by asking participants to recognize and label the emotional expressions. Secondly, questionnaires are used to validate the hypothesis about the impact of the text message and the emotional expressions separately and together, on the parameters such as intuitiveness, engagement, and preference.

The hypothesis H1 through H6 includes:
- H1: The participants will find the telepresence robot showing both the text messages and the plurality of emotional expressions more intuitive than the telepresence robot showing only the plurality of emotional expressions.
- H2: The participants will find the telepresence robot showing both the text messages and the plurality of emotional expressions more engaging than the telepresence robot showing only the plurality of emotional expressions.
- H3: The participants will prefer to use the telepresence robot showing both the text messages and the plurality of emotional expressions more than the telepresence robot showing only the plurality of emotional expressions.
- H4: The participants will find the telepresence robot showing both the text messages and the plurality of emotional expressions more intuitive than the telepresence robot showing only the text messages.
- H5: The participants will find the telepresence robot showing both the text messages and the plurality of emotional expressions more engaging than the telepresence robot showing only text messages.
- H6: The participants will prefer to use the telepresence robot showing both the text messages and the plurality of emotional expressions more than the telepresence robot showing only the text messages.

During the user study, the telepresence robot is manipulated to convey its internal state. Three conditions are selected to show the participants during user study.
- C1: The telepresence robot showing only the text message.
- C2: The telepresence robot showing only the plurality of emotional expression.
- C3: The telepresence robot showing both the emotional expression and the text message.

**Procedure:** For the user study the participants are made aware of a specific scenario in which the teleoperator is using the telepresence robot. The scenario is described to the participants as "there is an employee in a company and due to unexpected health issues, the person is unable to reach the office physically. There is a team meeting in the office that the person must attend, so the person is using the telepresence robot to join the team meeting remotely". After this, the participants are made familiar with the appearance of the telepresence robot with a picture. Then the participants are given questionnaires in three phases. In the first phase, the participants are asked for some general information, which includes age, gender, knowledge of English, past experience with the telepresence robots and whether they agree that the telepresence robots should display the plurality of emotional expressions on a 5-point scale, not necessary, somewhat necessary, necessary, very necessary, extremely necessary.

In the second phase, the participants are shown two interactive videos corresponding to two different types of conditions which are assigned randomly. A mix of between-participants and within-participants study design is conducted, where the participant pool is divided into two groups and assigns them either {C1, C3} or {C2, C3} conditions. For each of the participants, the order of the conditions is randomized to avoid bias. Each interactive video shows the teleoperator remotely controlling the telepresence robot and interacting with it by speaking. For C2 and C3 conditions, the video automatically pauses at pre-defined positions during the playback and two questions are overlaid on the video. The first is a choice-based question that asks the participant to identify the internal state corresponding to the emotional expression of the telepresence robot shown earlier. The second question asks the participant if they think that the emotional expression shown earlier helps to understand the internal state of the telepresence robot. These questions are referred to as in-context questions.

In the third phase, participants are given a questionnaire. The participants r asked to give ratings on a scale of 1-5, based on the two videos of the telepresence robot - i) how intuitive they found the two systems, ii) how engaging they found the two systems, and iii) how much they prefer to use either of the system. After this, the participants were also shown the emotional expressions of several other expressions as shown in FIG. 7, which were not shown during the in-context questions. Then the participants are asked to identify them as well, by selecting from a drop-down list of choices. To validate if the participants are paying attention to the videos, the participants were asked to identify the final position of the telepresence robot which was shown in the video. At last, the participants were asked whether now they think that the telepresence robots should display emotional expression, with the objective to check whether there is a change in preference of the participants after the experiment.

**Results:** A total of 96 participants volunteered for the user study. The participants are primarily from the two organizations that the authors are affiliated with, but also includes acquaintances of the authors. A wide range of age group of the participants are found, from 20 to 50. The top two age groups are 76% for 20-30 and 8% for 30-40. Among the participants, 16% have past experience with the telepresence robot, while the rest have no prior experience. Overall, 64% participants are male and 36% female, no participants from other genders. The report results according to the two experiment objectives stated earlier. The user study is conducted in English and all the participants have self-reported good understanding of English language.

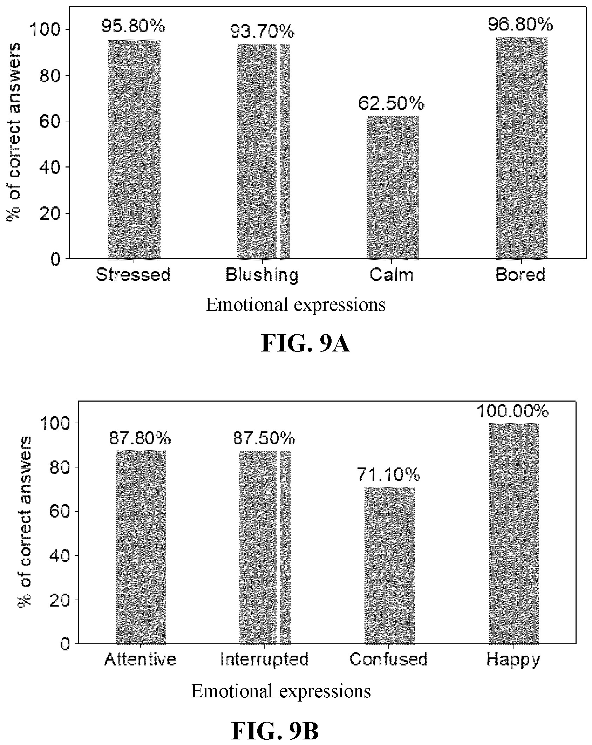

(a) **Expression identification:** The result of the emotional expression identification experiment from the user study in shown in FIGS. 9A and 9B, in accordance with some embodiments of the present disclosure. The designs of the emotional expressions, when shown within the context of the video, are mostly correctly identified by the participants, except for the Calm expression. Although 62% of the participants have correctly identified it, the rest primarily confused with the Happy expression. Interestingly, for the out-of-context expressions, which were shown later, all the participants could correctly identify the happy expression. The other emotional expressions are also mostly correctly identified, but the accuracy is lower than the in-context expressions. This result is in line with the existing study in ("J. Zhang and A. J. Sharkey, "Contextual recognition of robot emotions," in Towards Autonomous Robotic Systems: 12th Annual Conference, TAROS 2011, Sheffield, UK, August 31-September 2, 2011. Proceedings 12. Springer, 2011, pp. 78-89.").

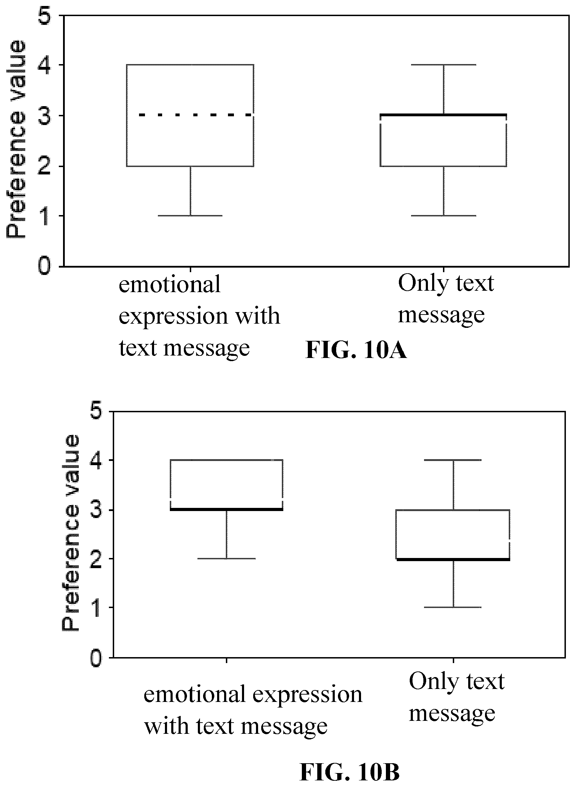

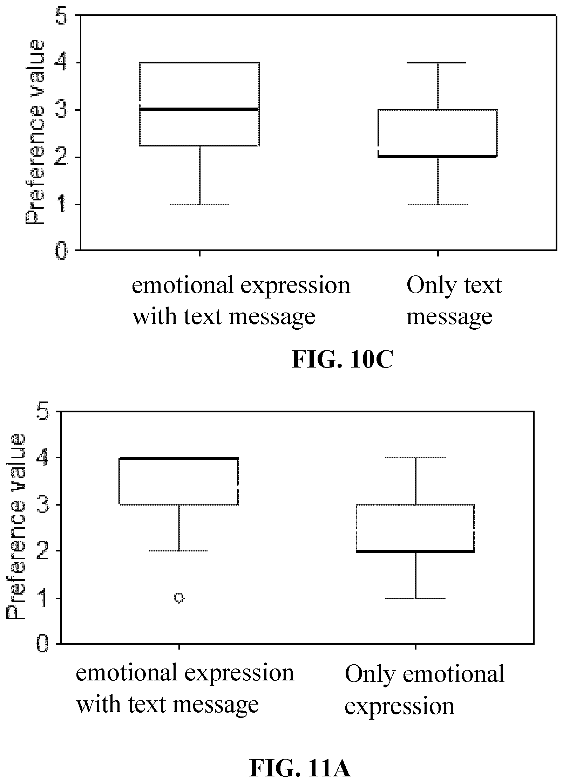

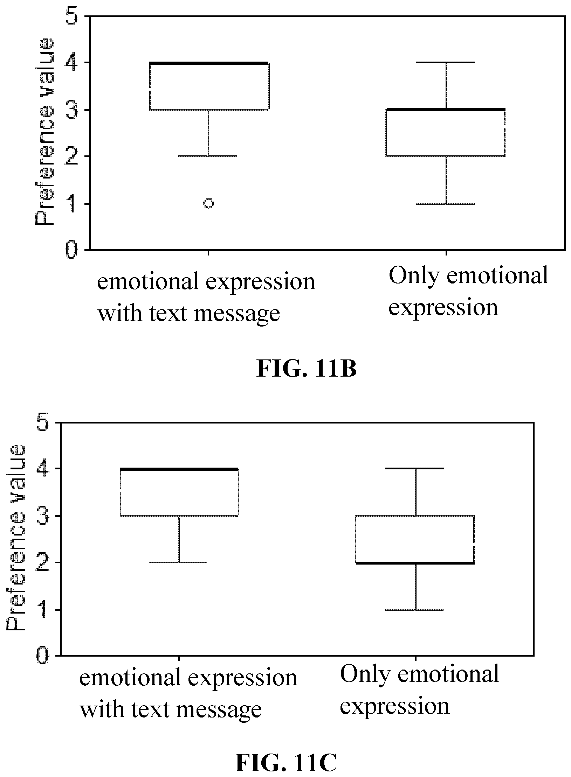

**(b) Hypothesis validation:** Firstly, a descriptive statistic for the questionnaire on the hypothesis is presented in FIGS. 10A, 10B, 10C, 11A, 11B, and 11C. Specifically, FIGS. 10A, 10B, and 10C illustrate user ratings in terms of intuitiveness, engagement, and user preferences for the telepresence robot showing emotional expressions with the text messages, and only text messages, in accordance with some embodiments of the present disclosure. Specifically, FIGS. 11A, 11B, and 11C illustrate the user ratings in terms of intuitiveness, engagement, and user preferences for the telepresence robot showing both the emotional expressions with the text messages, and only emotional expressions, in accordance with some embodiments of the present disclosure. For each of the hypothesis, a paired-sample t-test with the value of alpha set to a threshold of 0.05 is performed, if p-value is less than this threshold then the null hypothesis is rejected which states that there is no difference between the means of the two groups. The t-test is a statistical test that compares the means of two samples. The P value is defined as a probability under an assumption of no effect or no difference.

For H1, intuitiveness scores are (Mean (M)=2.01, Standard Deviation (S.D) =1.28) for C2 and (M=3.35, S.D=0.82) for C3. The p-value is 1.12e-08 and thus H1 is supported through the user study. Similarly, for H2, the engagement scores are obtained as (M=2.27, S.D=1.25) for C2 and (M=3.35, S.D=0.89) for C3. For H2, the p value is 1.25e-06, thus this hypothesis is also supported. For H3, the user preference scores are obtained as (M=1.45, S.D=1.37) for C2 and (M=3.33, S.D=1.03) for C3. For H3, the p-value is obtained as 1.45e-09. Thus, H3 is also supported.

For H4, intuitiveness scores are obtained as (M=2.68, S.D=1.09) for C1 and (M=2.81, S.D=1.10) for C3. The p-value is of 0.47, which is higher than the threshold and thus H4 is not supported in the study. For H5, the engagement scores are obtained as (M=1.77, S.D=1.29) for C1 and (M=3.0, S.D=1.12) for C3. Here, the p-value of 3.86e-06 is obtained and thus H5 is supported. Finally, the preference scores are obtained as (M=1.72, S.D=1.14) for C1 and (M=3.0, S.D=1.12) for C3. In this case, the p-value is of 2.2e-06 and thus H6 is also supported.

After a thorough analysis of the results, it is observed that the designs of the plurality of emotional expressions largely represent the internal state of the telepresence robot in the discussed scenarios. However, for a few of the plurality of emotional expressions, some participants do not associate the emotional expression with the internal state. Still, the results are encouraging. It was observed, particularly the hypothesis about the textual messages and the plurality of emotional expressions together are improving the interaction engagement than either of the modalities. Users also prefer to use the telepresence robot with both modalities. On the intuitiveness it was found that although using both the plurality of emotional expressions and the text messages is more intuitive than only using the emotional expressions and the text messages is also important for the intuitive interaction. The result of the question on whether the participants think that robots should display the plurality of emotional expressions is shown in Table II.

The written description describes the subject matter herein to enable any person skilled in the art to make and use the embodiments.

Embodiments herein provide a method and system for expressing telepresence robot internal states using combination of multiple modalities. The disclosed method focusses on the telepresence robot expressing its own internal working states in the form of a plurality of emotional expressions and corresponding text messages to the teleoperator, using a robot internal state predictor model. The internal working states are predicted by the robot internal state predictor model using (i) the previous internal state of the telepresence robot, (ii) the wake word, (iii) one of (a) the 'with audio' message and (b) the 'no audio' message, (iv) the text output, (v) the intended task, (vi) the ambiguity state vector, and (vii)the task manager state vector of the telepresence robot.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, 86or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with the scope of disclosed embodiments being indicated by the following claims.

## Claims

1. A processor implemented method (400), the method comprising:
receiving (402), via a speech interface of a telepresence robot controlled by a one or more hardware processors, a continuous incoming audio stream, from a teleoperator;
performing (404), via the one or more hardware processors, a voice activity detection, VAD, over a predefined sliding window, on the received continuous incoming audio stream, wherein the VAD is performed continuously until the VAD returns a positive signal on detecting a human voice in the continuous incoming audio stream;
recording (406), via the one or more hardware processors, an audio stream of a predefined minimum duration threshold, from the continuous incoming audio stream, upon detecting the human voice, wherein if a length of the recorded audio stream is less than the predefined minimum duration threshold, the telepresence robot resumes to the VAD;
detecting (408), via a pretrained wake word neural network model controlled by the one or more hardware processors, a wake word, from the recorded audio steam, provided the length of the recorded audio stream is greater than the predefined minimum duration threshold, wherein if the wake word detection returns positive, the telepresence robot sets an active listening flag;
performing (410), via the one or more hardware processors, the VAD over the predefined sliding window, on the received continuous incoming audio stream corresponding to an instruction to the telepresence robot, upon setting the active listening flag;
recording (412), via the speech interface of the one or more hardware processors, the audio stream for a predefined maximum duration, from the continuous incoming audio stream, wherein the audio stream comprising (i) a plurality of positive VAD chunks identified in the audio stream corresponding to presence of the human voice in the continuous incoming audio stream, and (ii) a plurality of negative VAD chunks identified in the audio stream corresponding to absence of the human voice in the continuous incoming audio stream, which are periodically added to an audio buffer based on the plurality of positive VAD chunks and a predefined silence threshold, and wherein if a continuous duration of the plurality of negative VAD chunks is greater than the predefined silence threshold, the recording of the audio stream is terminated;
predicting (414), via the one or more hardware processors, a text output corresponding to the recorded audio stream, by feeding the recorded audio stream to a pretrained Automatic Speech Recognition, ASR, Neural network model;
predicting (416), via the one or more hardware processors, an intended task recorded in the audio buffer, by feeding the predicted text output to a pretrained a pretrained natural language understanding, NLU, model;
predicting (418), via the one or more hardware processors, an ambiguity state vector of the intended task, by feeding the intended task to a heuristic technique;
predicting (420), via the one or more hardware processors, an internal state from among a plurality of internal states corresponding to task processing of the telepresence robot, by feeding a plurality of inputs to a robot internal state predictor model, wherein the plurality of inputs comprises (i) a previous internal state of the telepresence robot, (ii) the wake word predicted by the pretrained wake word neural network model, (iii) one of (a) a 'with audio' message and (b) a 'no audio' message, (iv) the text output predicted by the ASR neural network model, (v) the intended task predicted by the pretrained NLU model, (vi) the ambiguity state vector, and (vii) a task manager state vector of the telepresence robot; and
displaying (422), via the one or more hardware processors, a multimodal output comprising an emotional expression and a text message corresponding to the predicted internal state of the telepresence robot, over a screen interface of the teleoperator.

2. The processor implemented method of claim 1, wherein upon the termination of the recording of the audio stream, if the length of the plurality of positive VAD chunks satisfies a predefined chunk threshold, the 'with audio' message is fed to the robot internal state predictor model, wherein if the length of the plurality of positive VAD chunks does not satisfy the predefined chunk threshold, the audio buffer is discarded and the 'no audio' message is fed to the robot internal state predictor model.

3. The processor implemented method of claim 1, wherein the plurality of internal states of the telepresence robot represents corresponding plurality of emotional expressions and corresponding text messages, wherein the text messages are predefined based on the transitions of the plurality of internal states of the telepresence robot from one internal state to another internal state, wherein the plurality of internal states comprising (i) a neutral state, (ii) an attentive state (ii) a calm bored state, (iv) a happy state, (v) a bored state, (vi) a stressed state, (vii) an interrupted state, (viii) a confused state, and (ix) a blushing state, and wherein transitions of the plurality of internal states of the telepresence robot from one internal state to another internal state is designed as:
(a) initializing the internal state of the plurality of internal states to a neutral state during the telepresence robot is listening before detecting the wake word;
(b) transforming from the neutral state to the attentive state once the wake word is detected, wherein in the neutral state, the telepresence robot expects the instruction from the teleoperator indicating the active listening flag;
(c) transforming from the attentive state to the bored state beyond the predefined silence threshold, if the instruction not received from the teleoperator;
(d) transforming from the attentive to the task processing state if the instruction received from the teleoperator;
(e) transforming from the task processing state to the stressed state, if the telepresence robot currently performing another task;
(f) transforming from the task processing state to the interrupted state, if the telepresence robot is interrupted by an action;
(g) transforming from the task processing state to the confused state, if the telepresence robot confused while performing the action;
(h) transforming from the task processing state to the happy state on completion of the given instruction; and
(i) transforming from the happy state to the blushing state upon receiving an appreciation from the teleoperator.

4. The processor implemented method of claim 1, wherein predicting the internal state of the telepresence robot, by the robot internal state predictor model comprises creating an input vector composed of concatenation of the plurality of inputs, wherein the input vector comprises (a) an one-hot vector encoding of the previous internal state, (ii) the wake word, (iii) one of (a) the 'with audio' message and (b) the 'no audio' message, (iv) the text output (v) the intended task, and (vi) the ambiguity state vector, and (vii) and one-hot vector encoding of the task manager state of the telepresence robot, wherein the internal state of the telepresence robot is predicted by applying the argmax on an output of the robot internal state predictor model.

5. The processor implemented method of claim 1, wherein the telepresence robot resumes to the VAD if the pretrained wake word neural network model returns negative during detection of the wake word.

6. The processor implemented method of claim 1, wherein the robot internal state predictor model is pretrained with the plurality of inputs and corresponding annotated labels.

7. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive, via a speech interface of a telepresence robot, a continuous incoming audio stream, from a teleoperator;
perform a voice activity detection, VAD, over a predefined sliding window, on the received continuous incoming audio stream, wherein the VAD is performed continuously until the VAD returns a positive signal on detecting a human voice in the continuous incoming audio stream;
record an audio stream of a predefined minimum duration threshold, from the continuous incoming audio stream, upon detecting the human voice, wherein if a length of the recorded audio stream is less than the predefined minimum duration threshold, the telepresence robot resumes to the VAD;
detect, via a pretrained wake word neural network model, a wake word, from the recorded audio steam, provided the length of the recorded audio stream is greater than the predefined minimum duration threshold, wherein if the wake word detection returns positive, the telepresence robot sets an active listening flag;
perform the VAD over the predefined sliding window, on the received continuous incoming audio stream corresponding to an instruction to the telepresence robot, upon setting the active listening flag;
record the audio stream for a predefined maximum duration, from the continuous incoming audio stream, wherein the audio stream comprising (i) a plurality of positive VAD chunks identified in the audio stream corresponding to presence of the human voice in the continuous incoming audio stream, and (ii) a plurality of negative VAD chunks identified in the audio stream corresponding to absence of the human voice in the continuous incoming audio stream, which are periodically added to an audio buffer based on the plurality of positive VAD chunks and a predefined silence threshold, and wherein if a continuous duration of the plurality of negative VAD chunks is greater than the predefined silence threshold, the recording of the audio stream is terminated;
predict a text output corresponding to the recorded audio stream, by feeding the recorded audio stream to a pretrained Automatic Speech Recognition, ASR, Neural network model;
predict an intended task recorded in the audio buffer, by feeding the predicted text output to a pretrained natural language understanding, NLU, model;
predict an ambiguity state vector of the intended task, by feeding the intended task to a heuristic technique;
predict an internal state from among a plurality of internal states corresponding to task processing of the telepresence robot, by feeding a plurality of inputs to a robot internal state predictor model, wherein the plurality of inputs comprises (i) a previous internal state of the telepresence robot, (ii) the wake word predicted by the pretrained wake word neural network model, (iii) one of (a) a 'with audio' message and (b) a 'no audio' message, (iv) the text output predicted by the ASR neural network model, (v) the intended task predicted by the pretrained NLU model, (vi) the ambiguity state vector, and (vii) a task manager state vector of the telepresence robot; and
display a multimodal output comprising an emotional expression and a text message corresponding to the predicted internal state of the telepresence robot, over a screen interface of the teleoperator.

8. The system of claim 7, wherein upon the termination of the recording of the audio stream, if the length of the plurality of positive VAD chunks satisfies a predefined chunk threshold, the 'with audio' message is fed to the robot internal state predictor model, wherein if the length of the plurality of positive VAD chunks does not satisfy the predefined chunk threshold, the audio buffer is discarded and the 'no audio' message is fed to the robot internal state predictor model.

9. The system of claim 7, wherein the plurality of internal states of the telepresence robot represents corresponding plurality of emotional expressions and corresponding text messages, wherein the text messages are predefined based on the transitions of the plurality of internal states of the telepresence robot from one internal state to another internal state, wherein the plurality of internal states comprising (i) neutral state, (ii) attentive state (ii) calm bored state, (iv) happy state, (v) bored state, (vi) stressed state, (vii) interrupted state, (viii) confused state, and (ix) blushing state, and wherein transitions of the plurality of internal states of the telepresence robot from one internal state to another internal state is designed as:
(a) initializing the internal state of the plurality of internal states to a neutral state during the telepresence robot is listening before detecting the wake word;
(b) transforming from the neutral state to the attentive state once the wake word is detected, wherein in the neutral state, the telepresence robot expects the instruction from the teleoperator indicating the active listening flag;
(c) transforming from the attentive state to the bored state beyond the predefined silence threshold, if the instruction not received from the teleoperator;
(d) transforming from the attentive to the task processing state if the instruction received from the teleoperator;
(e) transforming from the task processing state to the stressed state, if the telepresence robot currently performing another task;
(f) transforming from the task processing state to the interrupted state, if the telepresence robot is interrupted by an action;
(g) transforming from the task processing state to the confused state, if the telepresence robot confused while performing the action;
(h) transforming from the task processing state to the happy state on completion of the given instruction; and
(i) transforming from the happy state to the blushing state upon receiving an appreciation from the tele operator.

10. The system of claim 7, wherein predicting the internal state of the telepresence robot, by the robot internal state predictor model comprises creating an input vector composed of concatenation of the plurality of inputs, wherein the input vector comprises (a) an one-hot vector encoding of the previous internal state, (ii) the wake word, (iii) one of (a) the 'with audio' message and (b) the 'no audio' message, (iv) the text output (v) the intended task, and (vi) the ambiguity state vector, and (vii) and one-hot vector encoding of the task manager state of the telepresence robot, wherein the internal state of the telepresence robot is predicted by applying the argmax on an output of the robot internal state predictor model.

11. The system of claim 7, wherein the telepresence robot resumes to the VAD if the pretrained wake word neural network model returns negative in detecting the wake word.

12. The system of claim 7, wherein the robot internal state predictor model is pretrained with the plurality of inputs and corresponding annotated labels.

13. One or more non-transitory machine-readable information storage mediums comprising one or more instructions which when executed by one or more hardware processors cause:
receiving, via a speech interface of a telepresence robot, a continuous incoming audio stream, from a teleoperator;
performing a voice activity detection, VAD, over a predefined sliding window, on the received continuous incoming audio stream, wherein the VAD is performed continuously until the VAD returns a positive signal on detecting a human voice in the continuous incoming audio stream;
recording an audio stream of a predefined minimum duration threshold, from the continuous incoming audio stream, upon detecting the human voice, wherein if a length of the recorded audio stream is less than the predefined minimum duration threshold, the telepresence robot resumes to the VAD;
detecting, via a pretrained wake word neural network model, a wake word, from the recorded audio steam, provided the length of the recorded audio stream is greater than the predefined minimum duration threshold, wherein if the wake word detection returns positive, the telepresence robot sets an active listening flag;
performing the VAD over the predefined sliding window, on the received continuous incoming audio stream corresponding to an instruction to the telepresence robot, upon setting the active listening flag;
recording, via the speech interface, the audio stream for a predefined maximum duration, from the continuous incoming audio stream, wherein the audio stream comprising (i) a plurality of positive VAD chunks identified in the audio stream corresponding to presence of the human voice in the continuous incoming audio stream, and (ii) a plurality of negative VAD chunks identified in the audio stream corresponding to absence of the human voice in the continuous incoming audio stream, which are periodically added to an audio buffer based on the plurality of positive VAD chunks and a predefined silence threshold, and wherein if a continuous duration of the plurality of negative VAD chunks is greater than the predefined silence threshold, the recording of the audio stream is terminated;
predicting a text output corresponding to the recorded audio stream, by feeding the recorded audio stream to a pretrained Automatic Speech Recognition ASR, Neural network model;
predicting an intended task recorded in the audio buffer, by feeding the predicted text output to a pretrained a pretrained natural language understanding, NLU, model;
predicting an ambiguity state vector of the intended task, by feeding the intended task to a heuristic technique;
predicting an internal state from among a plurality of internal states corresponding to task processing of the telepresence robot, by feeding a plurality of inputs to a robot internal state predictor model, wherein the plurality of inputs comprises (i) a previous internal state of the telepresence robot, (ii) the wake word predicted by the pretrained wake word neural network model, (iii) one of (a) a 'with audio' message and (b) a 'no audio' message, (iv) the text output predicted by the ASR neural network model, (v) the intended task predicted by the pretrained NLU model, (vi) the ambiguity state vector, and (vii) a task manager state vector of the telepresence robot; and
displaying a multimodal output comprising an emotional expression and a text message corresponding to the predicted internal state of the telepresence robot, over a screen interface of the teleoperator.

14. The one or more non-transitory machine-readable information storage mediums of claim 13, wherein upon the termination of the recording of the audio stream, if the length of the plurality of positive VAD chunks satisfies a predefined chunk threshold, the 'with audio' message is fed to the robot internal state predictor model, wherein if the length of the plurality of positive VAD chunks does not satisfy the predefined chunk threshold, the audio buffer is discarded and the 'no audio' message is fed to the robot internal state predictor model.

15. The one or more non-transitory machine-readable information storage mediums of claim 13, wherein the plurality of internal states of the telepresence robot represents corresponding plurality of emotional expressions and corresponding text messages, wherein the text messages are predefined based on the transitions of the plurality of internal states of the telepresence robot from one internal state to another internal state, wherein the plurality of internal states comprising (i) a neutral state, (ii) an attentive state (ii) a calm bored state, (iv) a happy state, (v) a bored state, (vi) a stressed state, (vii) an interrupted state, (viii) a confused state, and (ix) a blushing state, and wherein transitions of the plurality of internal states of the telepresence robot from one internal state to another internal state is designed as:
(a) initializing the internal state of the plurality of internal states to a neutral state during the telepresence robot is listening before detecting the wake word;
(b) transforming from the neutral state to the attentive state once the wake word is detected, wherein in the neutral state, the telepresence robot expects the instruction from the teleoperator indicating the active listening flag;
(c) transforming from the attentive state to the bored state beyond the predefined silence threshold, if the instruction not received from the teleoperator;
(d) transforming from the attentive to the task processing state if the instruction received from the teleoperator;
(e) transforming from the task processing state to the stressed state, if the telepresence robot currently performing another task;
(f) transforming from the task processing state to the interrupted state, if the telepresence robot is interrupted by an action;
(g) transforming from the task processing state to the confused state, if the telepresence robot confused while performing the action;
(h) transforming from the task processing state to the happy state on completion of the given instruction; and
(i) transforming from the happy state to the blushing state upon receiving an appreciation from the teleoperator.

## Patentansprüche

1. Prozessorimplementiertes Verfahren (400), wobei das Verfahren Folgendes umfasst:
Empfangen (402), über eine Sprachschnittstelle eines Telepräsenzroboters, der von einem oder mehreren Hardwareprozessoren gesteuert wird, eines kontinuierlichen eingehenden Audiostroms von einem Teleoperator;
Durchführen (404), über den einen oder die mehreren Hardwareprozessoren, einer Sprachaktivitätserkennung, VAD, über ein vordefiniertes Gleitfenster an dem empfangenen kontinuierlichen eingehenden Audiostrom, wobei die VAD kontinuierlich durchgeführt wird, bis die VAD ein positives Signal beim Erkennen einer menschlichen Stimme in dem kontinuierlichen eingehenden Audiostrom zurückgibt;
Aufzeichnen (406), über den einen oder die mehreren Hardwareprozessoren, eines Audiostroms mit einem vordefinierten Mindestdauerschwellenwert aus dem kontinuierlichen eingehenden Audiostrom beim Erkennen der menschlichen Stimme, wobei, wenn eine Länge des aufgezeichneten Audiostroms kleiner als der vordefinierte Mindestdauerschwellenwert ist, der Telepräsenzroboter zu der VAD zurückkehrt;
Erkennen (408), über ein vortrainiertes neuronales Weckwortnetzwerkmodell, das von dem einen oder den mehreren Hardwareprozessoren gesteuert wird, eines Weckworts aus dem aufgezeichneten Audiostrom, vorausgesetzt, dass die Länge des aufgezeichneten Audiostroms größer als der vordefinierte Mindestdauerschwellenwert ist, wobei, wenn die Weckworterkennung positiv zurückkehrt, der Telepräsenzroboter ein aktives Hörflag setzt;
Durchführen (410), über den einen oder die mehreren Hardwareprozessoren, der VAD über das vordefinierte Gleitfenster an dem empfangenen kontinuierlichen eingehenden Audiostrom entsprechend einer Anweisung an den Telepräsenzroboter beim Setzen des aktiven Hörflags;
Aufzeichnen (412), über die Sprachschnittstelle des einen oder der mehreren Hardwareprozessoren, des Audiostroms für eine vordefinierte maximale Dauer aus dem kontinuierlichen eingehenden Audiostrom, wobei der Audiostrom (i) eine Mehrzahl von positiven VAD-Blöcken, die in dem Audiostrom entsprechend der Anwesenheit der menschlichen Stimme in dem kontinuierlichen eingehenden Audiostrom identifiziert werden, und (ii) eine Mehrzahl von negativen VAD-Blöcken, die in dem Audiostrom entsprechend der Abwesenheit der menschlichen Stimme in dem kontinuierlichen eingehenden Audiostrom identifiziert werden, umfasst, die basierend auf der Mehrzahl von positiven VAD-Blöcken und einem vordefinierten Stilleschwellenwert periodisch zu einem Audiopuffer hinzugefügt werden, und wobei, wenn eine kontinuierliche Dauer der Mehrzahl von negativen VAD-Blöcken größer als der vordefinierte Stilleschwellenwert ist, das Aufzeichnen des Audiostroms beendet wird;
Vorhersagen (414), über den einen oder die mehreren Hardwareprozessoren, einer Textausgabe, die dem aufgezeichneten Audiostrom entspricht, durch Einspeisen des aufgezeichneten Audiostroms in ein vortrainiertes neuronales ASR-Netzwerkmodell;
Vorhersagen (416), über den einen oder die mehreren Hardwareprozessoren, einer beabsichtigten Aufgabe, die in dem Audiopuffer aufgezeichnet ist, durch Einspeisen der vorhergesagten Textausgabe in ein vortrainiertes NLU-Modell;
Vorhersagen (418), über den einen oder die mehreren Hardwareprozessoren, eines Mehrdeutigkeitszustandsvektors der beabsichtigten Aufgabe durch Einspeisen der beabsichtigten Aufgabe in eine heuristische Technik;
Vorhersagen (420), über den einen oder die mehreren Hardwareprozessoren, eines internen Zustands aus einer Mehrzahl von internen Zuständen entsprechend der Aufgabenverarbeitung des Telepräsenzroboters durch Einspeisen einer Mehrzahl von Eingaben in ein internes Roboterzustandsvorhersagemodell, wobei die Mehrzahl von Eingaben (i) einen vorherigen internen Zustand des Telepräsenzroboters, (ii) das Weckwort, das durch das vortrainierte neuronale Weckwortnetzwerkmodell vorhergesagt wird, (iii) eines von (a) einer "mit Audio"-Nachricht und (b) einer "kein Audio"-Nachricht, (iv) die Textausgabe, die durch das neuronale ASR-Netzwerkmodell vorhergesagt wird, (v) die beabsichtigte Aufgabe, die durch das vortrainierte NLU-Modell vorhergesagt wird, (vi) den Mehrdeutigkeitszustandsvektor und (vii) einen Aufgabenverwaltungszustandsvektor des Telepräsenzroboters umfasst; und
Anzeigen (422), über den einen oder die mehreren Hardwareprozessoren, einer multimodalen Ausgabe, die einen emotionalen Ausdruck und eine Textnachricht umfasst, die dem vorhergesagten internen Zustand des Telepräsenzroboters entspricht, über eine Bildschirmschnittstelle des Teleoperators.

2. Prozessorimplementiertes Verfahren nach Anspruch 1, wobei bei Beendigung der Aufzeichnung des Audiostroms, wenn die Länge der Mehrzahl von positiven VAD-Chunks einen vordefinierten Chunk-Schwellenwert erfüllt, die "mit Audio"-Nachricht in das interne Roboterzustandsvorhersagemodell eingespeist wird, wobei, wenn die Länge der Mehrzahl von positiven VAD-Chunks den vordefinierten Chunk-Schwellenwert nicht erfüllt, der Audiopuffer verworfen wird und die "kein Audio"-Nachricht in das interne Roboterzustandsvorhersagemodell eingespeist wird.

3. Prozessorimplementiertes Verfahren nach Anspruch 1, wobei die Mehrzahl von internen Zuständen des Telepräsenzroboters eine entsprechende Mehrzahl von emotionalen Ausdrücken und entsprechenden Textnachrichten darstellt, wobei die Textnachrichten basierend auf den Übergängen der Mehrzahl von internen Zuständen des Telepräsenzroboters von einem internen Zustand in einen anderen internen Zustand vordefiniert sind, wobei die Mehrzahl von internen Zuständen (i) einen neutralen Zustand, (ii) einen aufmerksamen Zustand, (ii) einen ruhigen langweiligen Zustand, (iv) einen glücklichen Zustand, (v) einen langweiligen Zustand, (vi) einen gestressten Zustand, (vii) einen unterbrochenen Zustand, (viii) einen verwirrten Zustand und (ix) einen Erröten-Zustand umfasst, und wobei Übergänge der Mehrzahl von internen Zuständen des Telepräsenzroboters von einem internen Zustand in einen anderen internen Zustand wie folgt ausgelegt sind:
(a) Initialisieren des internen Zustands der Mehrzahl von internen Zuständen in einen neutralen Zustand, während der Telepräsenzroboter lauscht, bevor das Weckwort detektiert wird;
(b) Umwandeln von dem neutralen Zustand in den aufmerksamen Zustand, sobald das Weckwort detektiert wird, wobei der Telepräsenzroboter in dem neutralen Zustand erwartet, dass die Anweisung von dem Teleoperator das aktive Lauschflag angibt;
(c) Umwandeln von dem aufmerksamen Zustand in den langweiligen Zustand über den vordefinierten Stilleschwellenwert hinaus, wenn die Anweisung nicht von dem Teleoperator empfangen wird;
(d) Umwandeln von dem aufmerksamen in den Aufgabenverarbeitungszustand, wenn die Anweisung von dem Teleoperator empfangen wird;
(e) Umwandeln von dem Aufgabenverarbeitungszustand in den gestressten Zustand, wenn der Telepräsenzroboter gegenwärtig eine andere Aufgabe ausführt;
(f) Umwandeln von dem Aufgabenverarbeitungszustand in den unterbrochenen Zustand, wenn der Telepräsenzroboter durch eine Aktion unterbrochen wird;
(g) Umwandeln von dem Aufgabenverarbeitungszustand in den verwirrten Zustand, wenn der Telepräsenzroboter verwirrt ist, während er die Aktion ausführt;
(h) Umwandeln von dem Aufgabenverarbeitungszustand in den glücklichen Zustand bei Abschluss der gegebenen Anweisung; und
(i) Umwandeln von dem glücklichen Zustand in den Erröten-Zustand bei Empfang einer Wertschätzung von dem Teleoperator.

4. Prozessorimplementiertes Verfahren nach Anspruch 1, wobei das Vorhersagen des internen Zustands des Telepräsenzroboters durch das interne Roboterzustandsvorhersagemodell das Erzeugen eines Eingabevektors umfasst, der aus einer Verkettung der Mehrzahl von Eingaben besteht, wobei der Eingabevektor (a) eine Ein-Hot-Vektorcodierung des vorherigen internen Zustands, (ii) das Weckwort, (iii) eines von (a) der "mit Audio"-Nachricht und (b) der "kein Audio"-Nachricht, (iv) die Textausgabe, (v) die beabsichtigte Aufgabe und (vi) den Mehrdeutigkeitszustandsvektor und (vii) eine Ein-Hot-Vektorcodierung des Aufgabenverwaltungszustands des Telepräsenzroboters umfasst, wobei der interne Zustand des Telepräsenzroboters durch Anwenden des Argmax auf eine Ausgabe des internen Roboterzustandsvorhersagemodells vorhergesagt wird.

5. Prozessorimplementiertes Verfahren nach Anspruch 1, wobei der Telepräsenzroboter zu der VAD zurückkehrt, wenn das vortrainierte neuronale Weckwortnetzwerkmodell während der Erkennung des Weckworts negativ zurückkehrt.

6. Prozessorimplementiertes Verfahren nach Anspruch 1, wobei das interne Roboterzustandsvorhersagemodell mit der Mehrzahl von Eingaben und entsprechenden kommentierten Labels vortrainiert wird.

7. System (100), das Folgendes umfasst:
einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:
Empfangen, über eine Sprachschnittstelle eines Telepräsenzroboters, eines kontinuierlichen eingehenden Audiostroms von einem Teleoperator;
Durchführen einer virtuellen Sprachaktivitätserkennung, VAD, über ein vordefiniertes Gleitfenster an dem empfangenen kontinuierlichen eingehenden Audiostrom, wobei die VAD kontinuierlich durchgeführt wird, bis die VAD ein positives Signal beim Erkennen einer menschlichen Stimme in dem kontinuierlichen eingehenden Audiostrom zurückgibt;
Aufzeichnen eines Audiostroms mit einem vordefinierten Mindestdauerschwellenwert aus dem kontinuierlichen eingehenden Audiostrom beim Erkennen der menschlichen Stimme, wobei, wenn eine Länge des aufgezeichneten Audiostroms kleiner als der vordefinierte Mindestdauerschwellenwert ist, der Telepräsenzroboter zu der VAD zurückkehrt;
Erkennen, über ein vortrainiertes neuronales Weckwortnetzwerkmodell, eines Weckworts aus dem aufgezeichneten Audiostrom, vorausgesetzt, dass die Länge des aufgezeichneten Audiostroms größer als der vordefinierte Mindestdauerschwellenwert ist, wobei, wenn die Weckworterkennung positiv zurückkehrt, der Telepräsenzroboter ein aktives Hörflag setzt;
Durchführen der VAD über das vordefinierte Gleitfenster an dem empfangenen kontinuierlichen eingehenden Audiostrom entsprechend einer Anweisung an den Telepräsenzroboter beim Setzen des aktiven Hörflags;
Aufzeichnen des Audiostroms für eine vordefinierte maximale Dauer aus dem kontinuierlichen eingehenden Audiostrom, wobei der Audiostrom (i) eine Mehrzahl von positiven VAD-Blöcken, die in dem Audiostrom entsprechend der Anwesenheit der menschlichen Stimme in dem kontinuierlichen eingehenden Audiostrom identifiziert werden, und (ii) eine Mehrzahl von negativen VAD-Blöcken, die in dem Audiostrom entsprechend der Abwesenheit der menschlichen Stimme in dem kontinuierlichen eingehenden Audiostrom identifiziert werden, umfasst, die basierend auf der Mehrzahl von positiven VAD-Blöcken und einem vordefinierten Stilleschwellenwert periodisch zu einem Audiopuffer hinzugefügt werden, und wobei, wenn eine kontinuierliche Dauer der Mehrzahl von negativen VAD-Blöcken größer als der vordefinierte Stilleschwellenwert ist, das Aufzeichnen des Audiostroms beendet wird;
Vorhersagen einer Textausgabe, die dem aufgezeichneten Audiostrom entspricht, durch Einspeisen des aufgezeichneten Audiostroms in ein vortrainiertes neuronales ASR-Netzwerkmodell;
Vorhersagen einer beabsichtigten Aufgabe, die in dem Audiopuffer aufgezeichnet ist, durch Einspeisen der vorhergesagten Textausgabe in ein vortrainiertes NLU-Modell;
Vorhersagen eines Mehrdeutigkeitszustandsvektors der beabsichtigten Aufgabe durch Einspeisen der beabsichtigten Aufgabe in eine heuristische Technik;
Vorhersagen eines internen Zustands aus einer Mehrzahl von internen Zuständen entsprechend der Aufgabenverarbeitung des Telepräsenzroboters durch Einspeisen einer Mehrzahl von Eingaben in ein internes Roboterzustandsvorhersagemodell, wobei die Mehrzahl von Eingaben (i) einen vorherigen internen Zustand des Telepräsenzroboters, (ii) das Weckwort, das durch das vortrainierte neuronale Weckwortnetzwerkmodell vorhergesagt wird, (iii) eines von (a) einer "mit Audio"-Nachricht und (b) einer "kein Audio"-Nachricht, (iv) die Textausgabe, die durch das neuronale ASR-Netzwerkmodell vorhergesagt wird, (v) die beabsichtigte Aufgabe, die durch das vortrainierte NLU-Modell vorhergesagt wird, (vi) den Mehrdeutigkeitszustandsvektor und (vii) einen Aufgabenverwaltungszustandsvektor des Telepräsenzroboters umfasst; und
Anzeigen einer multimodalen Ausgabe, die einen emotionalen Ausdruck und eine Textnachricht umfasst, die dem vorhergesagten internen Zustand des Telepräsenzroboters entspricht, über eine Bildschirmschnittstelle des Teleoperators.

8. System nach Anspruch 7, wobei bei Beendigung der Aufzeichnung des Audiostroms, wenn die Länge der Mehrzahl von positiven VAD-Chunks einen vordefinierten Chunk-Schwellenwert erfüllt, die "mit Audio"-Nachricht in das interne Roboterzustandsvorhersagemodell eingespeist wird, wobei, wenn die Länge der Mehrzahl von positiven VAD-Chunks den vordefinierten Chunk-Schwellenwert nicht erfüllt, der Audiopuffer verworfen wird und die "kein Audio"-Nachricht in das interne Roboterzustandsvorhersagemodell eingespeist wird.

9. System nach Anspruch 7, wobei die Mehrzahl von internen Zuständen des Telepräsenzroboters eine entsprechende Mehrzahl von emotionalen Ausdrücken und entsprechenden Textnachrichten darstellt, wobei die Textnachrichten basierend auf den Übergängen der Mehrzahl von internen Zuständen des Telepräsenzroboters von einem internen Zustand in einen anderen internen Zustand vordefiniert sind, wobei die Mehrzahl von internen Zuständen (i) einen neutralen Zustand, (ii) einen aufmerksamen Zustand, (ii) einen ruhigen langweiligen Zustand, (iv) einen glücklichen Zustand, (v) einen langweiligen Zustand, (vi) einen gestressten Zustand, (vii) einen unterbrochenen Zustand, (viii) einen verwirrten Zustand und (ix) einen Erröten-Zustand umfasst, und wobei Übergänge der Mehrzahl von internen Zuständen des Telepräsenzroboters von einem internen Zustand in einen anderen internen Zustand wie folgt ausgelegt sind:
(a) Initialisieren des internen Zustands der Mehrzahl von internen Zuständen in einen neutralen Zustand, während der Telepräsenzroboter lauscht, bevor das Weckwort detektiert wird;
(b) Umwandeln von dem neutralen Zustand in den aufmerksamen Zustand, sobald das Weckwort detektiert wird, wobei der Telepräsenzroboter in dem neutralen Zustand erwartet, dass die Anweisung von dem Teleoperator das aktive Lauschflag angibt;
(c) Umwandeln von dem aufmerksamen Zustand in den langweiligen Zustand über den vordefinierten Stilleschwellenwert hinaus, wenn die Anweisung nicht von dem Teleoperator empfangen wird;
(d) Umwandeln von dem aufmerksamen in den Aufgabenverarbeitungszustand, wenn die Anweisung von dem Teleoperator empfangen wird;
(e) Umwandeln von dem Aufgabenverarbeitungszustand in den gestressten Zustand, wenn der Telepräsenzroboter gegenwärtig eine andere Aufgabe ausführt;
(f) Umwandeln von dem Aufgabenverarbeitungszustand in den unterbrochenen Zustand, wenn der Telepräsenzroboter durch eine Aktion unterbrochen wird;
(g) Umwandeln von dem Aufgabenverarbeitungszustand in den verwirrten Zustand, wenn der Telepräsenzroboter verwirrt ist, während er die Aktion ausführt;
(h) Umwandeln von dem Aufgabenverarbeitungszustand in den glücklichen Zustand bei Abschluss der gegebenen Anweisung; und
(i) Umwandeln von dem glücklichen Zustand in den Erröten-Zustand bei Empfang einer Wertschätzung von dem Teleoperator.

10. System nach Anspruch 7, wobei das Vorhersagen des internen Zustands des Telepräsenzroboters durch das interne Roboterzustandsvorhersagemodell das Erzeugen eines Eingabevektors umfasst, der aus einer Verkettung der Mehrzahl von Eingaben besteht, wobei der Eingabevektor (a) eine Ein-Hot-Vektorcodierung des vorherigen internen Zustands, (ii) das Weckwort, (iii) eines von (a) der "mit Audio"-Nachricht und (b) der "kein Audio"-Nachricht, (iv) die Textausgabe, (v) die beabsichtigte Aufgabe und (vi) den Mehrdeutigkeitszustandsvektor und (vii) eine Ein-Hot-Vektorcodierung des Aufgabenverwaltungszustands des Telepräsenzroboters umfasst, wobei der interne Zustand des Telepräsenzroboters durch Anwenden des Argmax auf eine Ausgabe des internen Roboterzustandsvorhersagemodells vorhergesagt wird.

11. System nach Anspruch 7, wobei der Telepräsenzroboter zu der VAD zurückkehrt, wenn das vortrainierte neuronale Weckwortnetzwerkmodell bei der Erkennung des Weckworts negativ zurückkehrt.

12. System nach Anspruch 7, wobei das interne Roboterzustandsvorhersagemodell mit der Mehrzahl von Eingaben und entsprechenden kommentierten Labels vortrainiert wird.

13. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen, über eine Sprachschnittstelle eines Telepräsenzroboters, eines kontinuierlichen eingehenden Audiostroms von einem Teleoperator;
Durchführen einer Sprachaktivitätserkennung, VAD, über ein vordefiniertes Gleitfenster an dem empfangenen kontinuierlichen eingehenden Audiostrom, wobei die VAD kontinuierlich durchgeführt wird, bis die VAD ein positives Signal beim Erkennen einer menschlichen Stimme in dem kontinuierlichen eingehenden Audiostrom zurückgibt;
Aufzeichnen eines Audiostroms mit einem vordefinierten Mindestdauerschwellenwert aus dem kontinuierlichen eingehenden Audiostrom beim Erkennen der menschlichen Stimme, wobei, wenn eine Länge des aufgezeichneten Audiostroms kleiner als der vordefinierte Mindestdauerschwellenwert ist, der Telepräsenzroboter zu der VAD zurückkehrt;
Erkennen, über ein vortrainiertes neuronales Weckwortnetzwerkmodell, eines Weckworts aus dem aufgezeichneten Audiostrom, vorausgesetzt, dass die Länge des aufgezeichneten Audiostroms größer als der vordefinierte Mindestdauerschwellenwert ist, wobei, wenn die Weckworterkennung positiv zurückkehrt, der Telepräsenzroboter ein aktives Hörflag setzt;
Durchführen der VAD über das vordefinierte Gleitfenster an dem empfangenen kontinuierlichen eingehenden Audiostrom entsprechend einer Anweisung an den Telepräsenzroboter beim Setzen des aktiven Hörflags;
Aufzeichnen, über die Sprachschnittstelle, des Audiostroms für eine vordefinierte maximale Dauer aus dem kontinuierlichen eingehenden Audiostrom, wobei der Audiostrom (i) eine Mehrzahl von positiven VAD-Blöcken, die in dem Audiostrom entsprechend der Anwesenheit der menschlichen Stimme in dem kontinuierlichen eingehenden Audiostrom identifiziert werden, und (ii) eine Mehrzahl von negativen VAD-Blöcken, die in dem Audiostrom entsprechend der Abwesenheit der menschlichen Stimme in dem kontinuierlichen eingehenden Audiostrom identifiziert werden, umfasst, die basierend auf der Mehrzahl von positiven VAD-Blöcken und einem vordefinierten Stilleschwellenwert periodisch zu einem Audiopuffer hinzugefügt werden, und wobei, wenn eine kontinuierliche Dauer der Mehrzahl von negativen VAD-Blöcken größer als der vordefinierte Stilleschwellenwert ist, das Aufzeichnen des Audiostroms beendet wird;
Vorhersagen einer Textausgabe, die dem aufgezeichneten Audiostrom entspricht, durch Einspeisen des aufgezeichneten Audiostroms in ein vortrainiertes neuronales ASR-Netzwerkmodell;
Vorhersagen einer beabsichtigten Aufgabe, die in dem Audiopuffer aufgezeichnet ist, durch Einspeisen der vorhergesagten Textausgabe in ein vortrainiertes NLU-Modell;
Vorhersagen eines Mehrdeutigkeitszustandsvektors der beabsichtigten Aufgabe durch Einspeisen der beabsichtigten Aufgabe in eine heuristische Technik;
Vorhersagen eines internen Zustands aus einer Mehrzahl von internen Zuständen entsprechend der Aufgabenverarbeitung des Telepräsenzroboters durch Einspeisen einer Mehrzahl von Eingaben in ein internes Roboterzustandsvorhersagemodell, wobei die Mehrzahl von Eingaben (i) einen vorherigen internen Zustand des Telepräsenzroboters, (ii) das Weckwort, das durch das vortrainierte neuronale Weckwortnetzwerkmodell vorhergesagt wird, (iii) eines von (a) einer "mit Audio"-Nachricht und (b) einer "kein Audio"-Nachricht, (iv) die Textausgabe, die durch das neuronale ASR-Netzwerkmodell vorhergesagt wird, (v) die beabsichtigte Aufgabe, die durch das vortrainierte NLU-Modell vorhergesagt wird, (vi) den Mehrdeutigkeitszustandsvektor und (vii) einen Aufgabenverwaltungszustandsvektor des Telepräsenzroboters umfasst; und
Anzeigen einer multimodalen Ausgabe, die einen emotionalen Ausdruck und eine Textnachricht umfasst, die dem vorhergesagten internen Zustand des Telepräsenzroboters entspricht, über eine Bildschirmschnittstelle des Teleoperators.

14. Ein oder mehrere nichtflüchtige maschinenlesbare Informationsspeichermedien nach Anspruch 13, wobei bei Beendigung der Aufzeichnung des Audiostroms, wenn die Länge der Mehrzahl von positiven VAD-Chunks einen vordefinierten Chunk-Schwellenwert erfüllt, die "mit Audio"-Nachricht in das interne Roboterzustandsvorhersagemodell eingespeist wird, wobei, wenn die Länge der Mehrzahl von positiven VAD-Chunks den vordefinierten Chunk-Schwellenwert nicht erfüllt, der Audiopuffer verworfen wird und die "kein Audio"-Nachricht in das interne Roboterzustandsvorhersagemodell eingespeist wird.

15. Ein oder mehrere nichtflüchtige maschinenlesbare Informationsspeichermedien nach Anspruch 13, wobei die Mehrzahl von internen Zuständen des Telepräsenzroboters eine entsprechende Mehrzahl von emotionalen Ausdrücken und entsprechenden Textnachrichten darstellt, wobei die Textnachrichten basierend auf den Übergängen der Mehrzahl von internen Zuständen des Telepräsenzroboters von einem internen Zustand in einen anderen internen Zustand vordefiniert sind, wobei die Mehrzahl von internen Zuständen (i) einen neutralen Zustand, (ii) einen aufmerksamen Zustand, (ii) einen ruhigen langweiligen Zustand, (iv) einen glücklichen Zustand, (v) einen langweiligen Zustand, (vi) einen gestressten Zustand, (vii) einen unterbrochenen Zustand, (viii) einen verwirrten Zustand und (ix) einen Erröten-Zustand umfasst, und wobei Übergänge der Mehrzahl von internen Zuständen des Telepräsenzroboters von einem internen Zustand in einen anderen internen Zustand wie folgt ausgelegt sind:
(a) Initialisieren des internen Zustands der Mehrzahl von internen Zuständen in einen neutralen Zustand, während der Telepräsenzroboter lauscht, bevor das Weckwort detektiert wird;
(b) Umwandeln von dem neutralen Zustand in den aufmerksamen Zustand, sobald das Weckwort detektiert wird, wobei der Telepräsenzroboter in dem neutralen Zustand erwartet, dass die Anweisung von dem Teleoperator das aktive Lauschflag angibt;
(c) Umwandeln von dem aufmerksamen Zustand in den langweiligen Zustand über den vordefinierten Stilleschwellenwert hinaus, wenn die Anweisung nicht von dem Teleoperator empfangen wird;
(d) Umwandeln von dem aufmerksamen in den Aufgabenverarbeitungszustand, wenn die Anweisung von dem Teleoperator empfangen wird;
(e) Umwandeln von dem Aufgabenverarbeitungszustand in den gestressten Zustand, wenn der Telepräsenzroboter gegenwärtig eine andere Aufgabe ausführt;
(f) Umwandeln von dem Aufgabenverarbeitungszustand in den unterbrochenen Zustand, wenn der Telepräsenzroboter durch eine Aktion unterbrochen wird;
(g) Umwandeln von dem Aufgabenverarbeitungszustand in den verwirrten Zustand, wenn der Telepräsenzroboter verwirrt ist, während er die Aktion ausführt;
(h) Umwandeln von dem Aufgabenverarbeitungszustand in den glücklichen Zustand bei Abschluss der gegebenen Anweisung; und
(i) Umwandeln von dem glücklichen Zustand in den Erröten-Zustand bei Empfang einer Wertschätzung von dem Teleoperator.

## Revendications

1. Procédé mis en œuvre par processeur (400), le procédé comprenant :
la réception (402), via une interface vocale d'un robot de téléprésence commandé par un ou plusieurs processeurs matériels, d'un flux audio entrant continu, en provenance d'un téléopérateur ;
la réalisation (404), via les un ou plusieurs processeurs matériels, d'une détection d'activité vocale, VAD, sur une fenêtre glissante prédéfinie, sur le flux audio entrant continu reçu, dans lequel la VAD est réalisée en continu jusqu'à ce que la VAD renvoie un signal positif lors de la détection d'une voix humaine dans le flux audio entrant continu ;
l'enregistrement (406), via les un ou plusieurs processeurs matériels, d'un flux audio d'un seuil de durée minimale prédéfini, à partir du flux audio entrant continu, lors de la détection de la voix humaine, dans lequel si une longueur du flux audio enregistré est inférieure au seuil de durée minimale prédéfini, le robot de téléprésence reprend la VAD ;
la détection (408), via un modèle de réseau neuronal de mots de réveil préentraîné commandé par les un ou plusieurs processeurs matériels, d'un mot de réveil, à partir du flux audio enregistré, à condition que la longueur du flux audio enregistré soit supérieure au seuil de durée minimale prédéfini, dans lequel si la détection de mot de réveil renvoie positif, le robot de téléprésence règle un drapeau d'écoute actif ;
la réalisation (410), via les un ou plusieurs processeurs matériels, de la VAD sur la fenêtre glissante prédéfinie, sur le flux audio entrant continu reçu correspondant à une instruction au robot de téléprésence, lors de la définition du drapeau d'écoute actif ;
l'enregistrement (412), via l'interface vocale des un ou plusieurs processeurs matériels, du flux audio pendant une durée maximale prédéfinie, à partir du flux audio entrant continu, dans lequel le flux audio comprend (i) une pluralité de morceaux de VAD positifs identifiés dans le flux audio correspondant à la présence de la voix humaine dans le flux audio entrant continu, et (ii) une pluralité de morceaux de VAD négatifs identifiés dans le flux audio correspondant à l'absence de la voix humaine dans le flux audio entrant continu, qui sont périodiquement ajoutés à un tampon audio sur la base de la pluralité de morceaux de VAD positifs et d'un seuil de silence prédéfini, et dans lequel si une durée continue de la pluralité de morceaux de VAD négatifs est supérieure au seuil de silence prédéfini, l'enregistrement du flux audio est terminé ;
la prédiction (414), via les un ou plusieurs processeurs matériels, d'une sortie de texte correspondant au flux audio enregistré, en alimentant le flux audio enregistré à un modèle de réseau neuronal de reconnaissance vocale automatique, ASR, préentraîné ;
la prédiction (416), via les un ou plusieurs processeurs matériels, d'une tâche prévue enregistrée dans le tampon audio, en alimentant la sortie de texte prédite à un modèle de compréhension de langage naturel, NLU, préentraîné ;
la prédiction (418), via les un ou plusieurs processeurs matériels, d'un vecteur d'état d'ambiguïté de la tâche prévue, en alimentant la tâche prévue à une technique heuristique ;
la prédiction (420), via les un ou plusieurs processeurs matériels, d'un état interne parmi une pluralité d'états internes correspondant au traitement de tâche du robot de téléprésence, en alimentant une pluralité d'entrées à un modèle de prédicteur d'état interne de robot, dans lequel la pluralité d'entrées comprend (i) un état interne précédent du robot de téléprésence, (ii) le mot de réveil prédit par le modèle de réseau neuronal de mot de réveil préentraîné, (iii) l'un parmi (a) un message « avec audio » et (b) un message « sans audio », (iv) la sortie de texte prédite par le modèle de réseau neuronal ASR, (v) la tâche prévue prédite par le modèle NLU préentraîné, (vi) le vecteur d'état d'ambiguïté, et (vii) un vecteur d'état de gestionnaire de tâche du robot de téléprésence ; et
l'affichage (422), via les un ou plusieurs processeurs matériels, d'une sortie multimodale comprenant une expression émotionnelle et un message de texte correspondant à l'état interne prédit du robot de téléprésence, sur une interface d'écran du téléopérateur.

2. Procédé mis en œuvre par processeur selon la revendication 1, dans lequel à la fin de l'enregistrement du flux audio, si la longueur de la pluralité de segments VAD positifs satisfait un seuil de segment prédéfini, le message « avec audio » est alimenté au modèle de prédicteur d'état interne de robot, dans lequel si la longueur de la pluralité de segments VAD positifs ne satisfait pas le seuil de segment prédéfini, le tampon audio est rejeté et le message « sans audio » est alimenté au modèle de prédicteur d'état interne de robot.

3. Procédé mis en œuvre par processeur selon la revendication 1, dans lequel la pluralité d'états internes du robot de téléprésence représente une pluralité correspondante d'expressions émotionnelles et de messages de texte correspondants, dans lequel les messages de texte sont prédéfinis sur la base des transitions de la pluralité d'états internes du robot de téléprésence d'un état interne à un autre état interne, dans lequel la pluralité d'états internes comprend (i) un état neutre, (ii) un état attentif, (ii) un état calme ennuyé, (iv) un état heureux, (v) un état ennuyé, (vi) un état stressé, (vii) un état interrompu, (viii) un état confus, et (ix) un état rougissant, et dans lequel les transitions de la pluralité d'états internes du robot de téléprésence d'un état interne à un autre état interne sont conçues comme :
(a) l'initialisation de l'état interne de la pluralité d'états internes à un état neutre pendant que le robot de téléprésence écoute avant la détection du mot de réveil ;
(b) la transformation de l'état neutre à l'état attentif une fois que le mot de réveil est détecté, dans lequel dans l'état neutre, le robot de téléprésence attend l'instruction du téléopérateur indiquant le drapeau d'écoute actif;
(c) la transformation de l'état attentif à l'état ennuyé au-delà du seuil de silence prédéfini, si l'instruction n'est pas reçue du téléopérateur ;
(d) la transformation de l'état attentif à l'état de traitement de tâche si l'instruction est reçue du téléopérateur ;
(e) la transformation de l'état de traitement de tâche à l'état stressé, si le robot de téléprésence réalise actuellement une autre tâche ;
(f) la transformation de l'état de traitement de tâche à l'état interrompu, si le robot de téléprésence est interrompu par une action ;
(g) la transformation de l'état de traitement de tâche à l'état confus, si le robot de téléprésence est confus pendant la réalisation de l'action ;
(h) la transformation de l'état de traitement de tâche à l'état heureux à la fin de l'instruction donnée ; et
(i) la transformation de l'état heureux à l'état rougissant lors de la réception d'une appréciation du téléopérateur.

4. Procédé mis en œuvre par processeur selon la revendication 1, dans lequel la prédiction de l'état interne du robot de téléprésence, par le modèle de prédicteur d'état interne de robot comprend la création d'un vecteur d'entrée composé d'une concaténation de la pluralité d'entrées, dans lequel le vecteur d'entrée comprend (a) un codage de vecteur à un point chaud de l'état interne précédent, (ii) le mot de réveil, (iii) l'un parmi (a) le message « avec audio » et (b) le message « sans audio », (iv) la sortie de texte, (v) la tâche prévue, et (vi) le vecteur d'état d'ambiguïté, et (vii) un codage de vecteur à un point chaud de l'état de gestionnaire de tâche du robot de téléprésence, dans lequel l'état interne du robot de téléprésence est prédit en appliquant l'argmax sur une sortie du modèle de prédicteur d'état interne de robot.

5. Procédé mis en œuvre par processeur selon la revendication 1, dans lequel le robot de téléprésence reprend à la VAD si le modèle de réseau neuronal de mots de réveil préentraîné renvoie négatif pendant la détection du mot de réveil.

6. Procédé mis en œuvre par processeur selon la revendication 1, dans lequel le modèle de prédicteur d'état interne de robot est préentraîné avec la pluralité d'entrées et des étiquettes annotées correspondantes.

7. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
recevoir, via une interface vocale d'un robot de téléprésence, un flux audio entrant continu, en provenance d'un téléopérateur ;
réaliser une détection d'activité vocale virtuelle, VAD, sur une fenêtre glissante prédéfinie, sur le flux audio entrant continu reçu, dans lequel la VAD est réalisée en continu jusqu'à ce que la VAD renvoie un signal positif lors de la détection d'une voix humaine dans le flux audio entrant continu;
enregistrer un flux audio d'un seuil de durée minimale prédéfini, à partir du flux audio entrant continu, lors de la détection de la voix humaine, dans lequel si une longueur du flux audio enregistré est inférieure au seuil de durée minimale prédéfini, le robot de téléprésence reprend la VAD ;
détecter, via un modèle de réseau neuronal de mots de réveil préentraîné, un mot de réveil, à partir du flux audio enregistré, à condition que la longueur du flux audio enregistré soit supérieure au seuil de durée minimale prédéfini, dans lequel si la détection de mot de réveil renvoie positif, le robot de téléprésence règle un drapeau d'écoute actif ;
réaliser la VAD sur la fenêtre glissante prédéfinie, sur le flux audio entrant continu reçu correspondant à une instruction au robot de téléprésence, lors de la définition du drapeau d'écoute actif ;
enregistrer le flux audio pendant une durée maximale prédéfinie, à partir du flux audio entrant continu, dans lequel le flux audio comprend (i) une pluralité de morceaux de VAD positifs identifiés dans le flux audio correspondant à la présence de la voix humaine dans le flux audio entrant continu, et (ii) une pluralité de morceaux de VAD négatifs identifiés dans le flux audio correspondant à l'absence de la voix humaine dans le flux audio entrant continu, qui sont périodiquement ajoutés à un tampon audio sur la base de la pluralité de morceaux de VAD positifs et d'un seuil de silence prédéfini, et dans lequel si une durée continue de la pluralité de morceaux de VAD négatifs est supérieure au seuil de silence prédéfini, l'enregistrement du flux audio est terminé ;
prédire une sortie de texte correspondant au flux audio enregistré, en alimentant le flux audio enregistré à un modèle de réseau neuronal de reconnaissance vocale automatique, ASR, préentraîné ;
prédire une tâche prévue enregistrée dans le tampon audio, en alimentant la sortie de texte prédite à un modèle de compréhension de langage naturel, NLU, préentraîné ;
prédire un vecteur d'état d'ambiguïté de la tâche prévue, en alimentant la tâche prévue à une technique heuristique ;
prédire un état interne parmi une pluralité d'états internes correspondant au traitement de tâche du robot de téléprésence, en alimentant une pluralité d'entrées à un modèle de prédicteur d'état interne de robot, dans lequel la pluralité d'entrées comprend (i) un état interne précédent du robot de téléprésence, (ii) le mot de réveil prédit par le modèle de réseau neuronal de mot de réveil préentraîné, (iii) l'un parmi (a) un message « avec audio » et (b) un message « sans audio », (iv) la sortie de texte prédite par le modèle de réseau neuronal ASR, (v) la tâche prévue prédite par le modèle NLU préentraîné, (vi) le vecteur d'état d'ambiguïté, et (vii) un vecteur d'état de gestionnaire de tâche du robot de téléprésence ; et
afficher une sortie multimodale comprenant une expression émotionnelle et un message de texte correspondant à l'état interne prédit du robot de téléprésence, sur une interface d'écran du téléopérateur.

8. Système selon la revendication 7, dans lequel à la fin de l'enregistrement du flux audio, si la longueur de la pluralité de morceaux de VAD positifs satisfait un seuil de segment prédéfini, le message « avec audio » est alimenté au modèle de prédicteur d'état interne de robot, dans lequel si la longueur de la pluralité de morceaux de VAD positifs ne satisfait pas le seuil de segment prédéfini, le tampon audio est rejeté et le message « sans audio » est alimenté au modèle de prédicteur d'état interne de robot.

9. Système selon la revendication 7, dans lequel la pluralité d'états internes du robot de téléprésence représente une pluralité correspondante d'expressions émotionnelles et de messages de texte correspondants, dans lequel les messages de texte sont prédéfinis sur la base des transitions de la pluralité d'états internes du robot de téléprésence d'un état interne à un autre état interne, dans lequel la pluralité d'états internes comprend (i) un état neutre, (ii) un état attentif, (ii) un état calme ennuyé, (iv) un état heureux, (v) un état ennuyé, (vi) un état stressé, (vii) un état interrompu, (viii) un état confus, et (ix) un état rougissant, et dans lequel les transitions de la pluralité d'états internes du robot de téléprésence d'un état interne à un autre état interne sont conçues comme :
(a) l'initialisation de l'état interne de la pluralité d'états internes à un état neutre pendant que le robot de téléprésence écoute avant la détection du mot de réveil ;
(b) la transformation de l'état neutre à l'état attentif une fois que le mot de réveil est détecté, dans lequel dans l'état neutre, le robot de téléprésence attend l'instruction du téléopérateur indiquant le drapeau d'écoute actif;
(c) la transformation de l'état attentif à l'état ennuyé au-delà du seuil de silence prédéfini, si l'instruction n'est pas reçue du téléopérateur ;
(d) la transformation de l'état attentif à l'état de traitement de tâche si l'instruction est reçue du téléopérateur ;
(e) la transformation de l'état de traitement de tâche à l'état stressé, si le robot de téléprésence réalise actuellement une autre tâche ;
(f) la transformation de l'état de traitement de tâche à l'état interrompu, si le robot de téléprésence est interrompu par une action ;
(g) la transformation de l'état de traitement de tâche à l'état confus, si le robot de téléprésence est confus pendant la réalisation de l'action ;
(h) la transformation de l'état de traitement de tâche à l'état heureux à la fin de l'instruction donnée ; et
(i) la transformation de l'état heureux à l'état rougissant lors de la réception d'une appréciation du téléopérateur.

10. Système selon la revendication 7, dans lequel la prédiction de l'état interne du robot de téléprésence, par le modèle de prédicteur d'état interne de robot comprend la création d'un vecteur d'entrée composé d'une concaténation de la pluralité d'entrées, dans lequel le vecteur d'entrée comprend (a) un codage de vecteur à un point chaud de l'état interne précédent, (ii) le mot de réveil, (iii) l'un parmi (a) le message « avec audio » et (b) le message « sans audio », (iv) la sortie de texte, (v) la tâche prévue, et (vi) le vecteur d'état d'ambiguïté, et (vii) un codage de vecteur à un point chaud de l'état de gestionnaire de tâche du robot de téléprésence, dans lequel l'état interne du robot de téléprésence est prédit en appliquant l'argmax sur une sortie du modèle de prédicteur d'état interne de robot.

11. Système selon la revendication 7, dans lequel le robot de téléprésence reprend à la VAD si le modèle de réseau neuronal de mots de réveil préentraîné renvoie négatif dans la détection du mot de réveil.

12. Système selon la revendication 7, dans lequel le modèle de prédicteur d'état interne de robot est préentraîné avec la pluralité d'entrées et des étiquettes annotées correspondantes.

13. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, via une interface vocale d'un robot de téléprésence, d'un flux audio entrant continu, en provenance d'un téléopérateur ;
la réalisation d'une détection d'activité vocale, VAD, sur une fenêtre glissante prédéfinie, sur le flux audio entrant continu reçu, dans lequel la VAD est réalisée en continu jusqu'à ce que la VAD renvoie un signal positif lors de la détection d'une voix humaine dans le flux audio entrant continu ;
l'enregistrement d'un flux audio d'un seuil de durée minimale prédéfini, à partir du flux audio entrant continu, lors de la détection de la voix humaine, dans lequel si une longueur du flux audio enregistré est inférieure au seuil de durée minimale prédéfini, le robot de téléprésence reprend la VAD ;
la détection, via un modèle de réseau neuronal de mots de réveil préentraîné, d'un mot de réveil, à partir du flux audio enregistré, à condition que la longueur du flux audio enregistré soit supérieure au seuil de durée minimale prédéfini, dans lequel si la détection de mot de réveil renvoie positif, le robot de téléprésence règle un drapeau d'écoute actif ;
la réalisation de la VAD sur la fenêtre glissante prédéfinie, sur le flux audio entrant continu reçu correspondant à une instruction au robot de téléprésence, lors de la définition du drapeau d'écoute actif ;
l'enregistrement, via l'interface vocale, du flux audio pendant une durée maximale prédéfinie, à partir du flux audio entrant continu, dans lequel le flux audio comprend (i) une pluralité de morceaux de VAD positifs identifiés dans le flux audio correspondant à la présence de la voix humaine dans le flux audio entrant continu, et (ii) une pluralité de morceaux de VAD négatifs identifiés dans le flux audio correspondant à l'absence de la voix humaine dans le flux audio entrant continu, qui sont périodiquement ajoutés à un tampon audio sur la base de la pluralité de morceaux de VAD positifs et d'un seuil de silence prédéfini, et dans lequel si une durée continue de la pluralité de morceaux de VAD négatifs est supérieure au seuil de silence prédéfini, l'enregistrement du flux audio est terminé ;
la prédiction d'une sortie de texte correspondant au flux audio enregistré, en alimentant le flux audio enregistré à un modèle de réseau neuronal de reconnaissance vocale automatique, ASR, préentraîné ;
la prédiction d'une tâche prévue enregistrée dans le tampon audio, en alimentant la sortie de texte prédite à un modèle de compréhension de langage naturel, NLU, préentraîné ;
la prédiction d'un vecteur d'état d'ambiguïté de la tâche prévue, en alimentant la tâche prévue à une technique heuristique ;
la prédiction d'un état interne parmi une pluralité d'états internes correspondant au traitement de tâche du robot de téléprésence, en alimentant une pluralité d'entrées à un modèle de prédicteur d'état interne de robot, dans lequel la pluralité d'entrées comprend (i) un état interne précédent du robot de téléprésence, (ii) le mot de réveil prédit par le modèle de réseau neuronal de mot de réveil préentraîné, (iii) l'un parmi (a) un message « avec audio » et (b) un message « sans audio », (iv) la sortie de texte prédite par le modèle de réseau neuronal ASR, (v) la tâche prévue prédite par le modèle NLU préentraîné, (vi) le vecteur d'état d'ambiguïté, et (vii) un vecteur d'état de gestionnaire de tâche du robot de téléprésence ; et
l'affichage d'une sortie multimodale comprenant une expression émotionnelle et un message de texte correspondant à l'état interne prédit du robot de téléprésence, sur une interface d'écran du téléopérateur.

14. Un ou plusieurs supports de stockage d'informations lisibles par machine non transitoires selon la revendication 13, dans lequel à la fin de l'enregistrement du flux audio, si la longueur de la pluralité de morceaux de VAD positifs satisfait un seuil de segment prédéfini, le message « avec audio » est alimenté au modèle de prédicteur d'état interne de robot, dans lequel si la longueur de la pluralité de morceaux de VAD positifs ne satisfait pas le seuil de segment prédéfini, le tampon audio est rejeté et le message « sans audio » est alimenté au modèle de prédicteur d'état interne de robot.

15. Un ou plusieurs supports de stockage d'informations lisibles par machine non transitoires selon la revendication 13, dans lequel la pluralité d'états internes du robot de téléprésence représente une pluralité correspondante d'expressions émotionnelles et de messages de texte correspondants, dans lequel les messages de texte sont prédéfinis sur la base des transitions de la pluralité d'états internes du robot de téléprésence d'un état interne à un autre état interne, dans lequel la pluralité d'états internes comprend (i) un état neutre, (ii) un état attentif, (ii) un état calme ennuyé, (iv) un état heureux, (v) un état ennuyé, (vi) un état stressé, (vii) un état interrompu, (viii) un état confus, et (ix) un état rougissant, et dans lequel les transitions de la pluralité d'états internes du robot de téléprésence d'un état interne à un autre état interne sont conçues comme :
(a) l'initialisation de l'état interne de la pluralité d'états internes à un état neutre pendant que le robot de téléprésence écoute avant la détection du mot de réveil ;
(b) la transformation de l'état neutre à l'état attentif une fois que le mot de réveil est détecté, dans lequel dans l'état neutre, le robot de téléprésence attend l'instruction du téléopérateur indiquant le drapeau d'écoute actif ;
(c) la transformation de l'état attentif à l'état ennuyé au-delà du seuil de silence prédéfini, si l'instruction n'est pas reçue du téléopérateur ;
(d) la transformation de l'état attentif à l'état de traitement de tâche si l'instruction est reçue du téléopérateur ;
(e) la transformation de l'état de traitement de tâche à l'état stressé, si le robot de téléprésence réalise actuellement une autre tâche ;
(f) la transformation de l'état de traitement de tâche à l'état interrompu, si le robot de téléprésence est interrompu par une action ;
(g) la transformation de l'état de traitement de tâche à l'état confus, si le robot de téléprésence est confus pendant la réalisation de l'action ;
(h) la transformation de l'état de traitement de tâche à l'état heureux à la fin de l'instruction donnée ; et
(i) la transformation de l'état heureux à l'état rougissant lors de la réception d'une appréciation du téléopérateur.
